# EUROPEAN PATENT APPLICATION

(11) **EP 1 901 145 A2**
(43) Date of publication of application: **19.03.2008**
(21) Application number: 07016567.5
(22) Date of filing: 23.08.2007
(51) Int. Cl.: G05B 19/042

(54) **Field device and method of operating the same**

(30) Priority: 23.08.2006 EP 06017579
(71) Applicant: MicroNet Sensorik GmbH, 85630 Grasbrunn (DE)
(72) Inventor: Hertel, Jürgen, 85630 Grasbrunn (DE); Pahlke, Wolfang, 01239 Dresden (DE)
(74) Representative: Samson & Partner

(57) **Abstract**

Field device systems comprising at least one of a data source and a data sink, an application unit, a network for digital data communications between data source and the application unit; and an electronic data sheet including information indicative of a lower limit, an upper limit and a function.

## Description

### Field of the invention

The present invention relates to the field of field device systems.

### Background of the invention

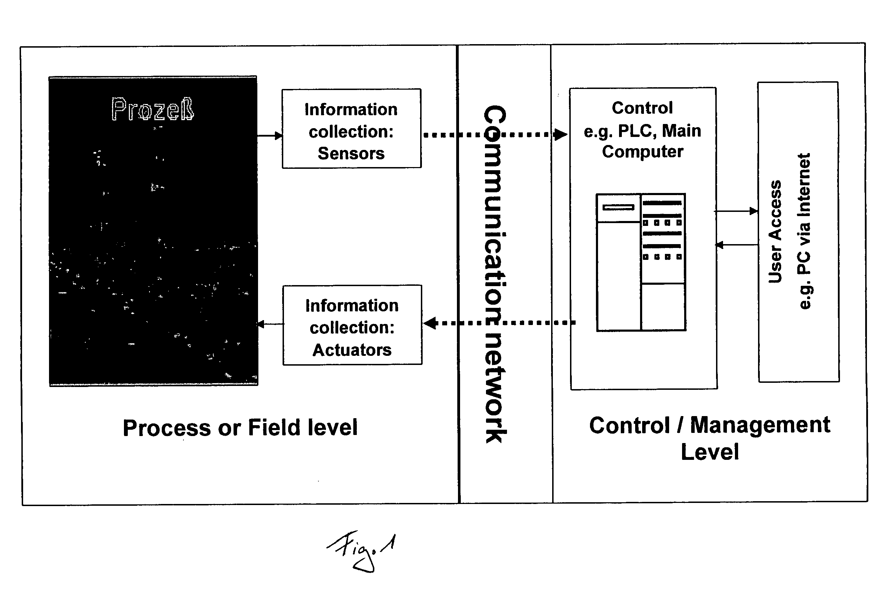

Digital communication networks are in the center of modem automation systems. They allow the efficient and reliable connection of field level devices (like sensors and actuators) to the control logic and processing tasks and are critical to the overall efficiency of the entire system. Parallel to the increasing complexity of automation systems the number and type of field level devices - or simply field devices - is increasing continuously. At the same time more and more applications require the direct access from the top network level to each individual field device in order to collect process data via Ethernet or the Internet in a distributed fashion and in real time, and process such data instantaneously. Examples are remote meter reading, control of an elevator or control of an entire crude oil refinery process (see Fig. 1).

In building management systems, for example, a "medium size" automation system today comprises approx. 10,000 field devices whose data must be made available throughout the distributed network without delay.

One of the main difficulties in this rapidly growing market is the efficient and cost effective installation and commissioning of field devices in the network. There are at least three reasons for that:

Generally, field devices transmit or receive only simple analog current or voltage signals. In order to transmit such "raw" signals through a digital network each field device requires a special hardware and software interface.

The interface must be "programmed" to fit the respective field device. As a consequence, the installation or the replacement of a device requires costly field programming.

Each field device must be logically "integrated" in the control program by a time consuming manual configuration process. This requires complex software tools and a substantial design and integration effort.

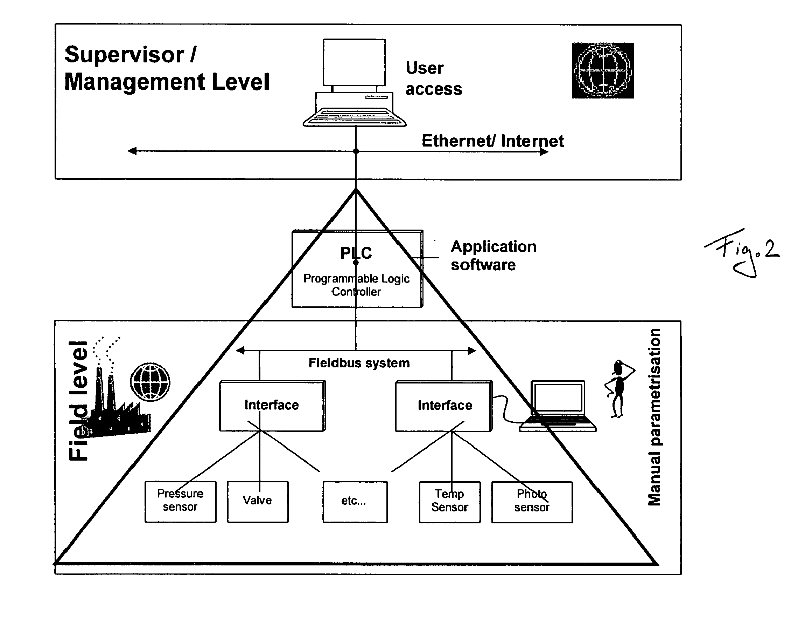

The lack of an efficient way of field device integration has implications regarding the entire structure of a traditional automation system. Automation systems are typically organized in a pronounced hierarchical structure in which the information generated by the field devices is processed in several sequential steps and is eventually passed on to a central supervisory system (Fig. 2).

In traditional systems several sensors and actuators are bundled together in a single interface module. The interface converts the analog signals into data ("digitalization") and passes them on to the communication network - usually a "fieldbus system".

An indirect consequence of a traditional architecture is that the system becomes so inflexible that each modification of the application software requires an additional development effort and associated cost. Further, the device commissioning procedure of the central controller will allow the access to the individual field devices, but only with exceptional programming effort. In case the data arriving from the field devices are filtered and preprocessed on their way to the controller in order to reduce computing load, the transparency in the network will be lost entirely.

### Object of the invention

To at least minimize the drawback of prior art approaches exemplary indicated above, the object of the present invention is to provide solutions resulting in interoperability in the field of field device systems.

### Short description of the invention

To solve the above object, the present invention provides methods and systems as defined in the independent claims. Preferred embodiments thereof are defined in the dependent claims.

According to an aspect of the present invention there is provided a method of operating a field device system, wherein field device system includes a data source/producer, an application unit and a network for digital data communications between data source/producer and the application unit, wherein the data source/producer is adapted to generate dimension-less data values in response to physical conditions in an environment of the data source/producer, the method comprising the steps of:
- defining a lower limit an d an upper limit for the data source/producer, the lower limit and the upper limit defining a range only in which the data source/producer is capable of generating dimension-less data values;
- defining a function that maps dimension-less data values of the data source/producer to a physical condition in the environment of the data source/producer;
- including information indicative of the lower limit, the upper limit and the function, respectively, in an electronic data sheet;
- providing the electronic data sheet to the application unit;
- generating by means of the data source/producer at least one dimension-less data value;
- communicating the at least one dimension-less data value from the data source/producer to the application unit; and
- processing by means of the application unit the at least one dimension-less data value on the basis the information indicative of the lower limit, the upper limit and the function, respectively, in the electronic data sheet to obtain a dimensional quantity representing a physical condition in the environment of the data source/producer in response to which physical condition the at least one dimension-less data value has been generated.

According to a further aspect of the present invention there is provided a method of operating a field device system, wherein field device system includes a data sink/consumer, an application unit and a network for digital data communications between data sink/consumer and the application unit, wherein the data sink/consumer is adapted to be operated on the basis of dimension-less data values each of which indicating a physical condition to be effected by the data sink/consumer, the method comprising the steps of:
- defining a lower limit and an upper limit for the data sink/consumer, the lower limit and the upper limit defining a range only in which the data sink/consumer is capable of being operated;
- defining a function that maps dimension-less data values for the data sink/consumer to a respective physical condition to be effected by the data sink/consumer;
- including information indicative of the lower limit, the upper limit and the function, respectively, in an electronic data sheet;
- providing the electronic data sheet to the application unit;
- providing at least one dimensional quantity representing a physical condition to effected by the data sink/consumer;
- processing the at least one dimensional quantity by means of the application unit on the basis the information indicative of the lower limit, the upper limit and the function, respectively, in the electronic data sheet to obtain at least one dimension-less data value;
- communicating the at least one dimension-less data value from the application unit to the data sink/consumer; and
- effecting by means of the data sink/consumer on the basis of the at least one dimension-less data value the physical condition.

According to a further aspect of the present invention there is provided a method of operating a field device system, wherein field device system includes a data source/producer, the method comprising the steps of:
- defining a lower limit and an upper limit for the data source/producer, the lower limit and the upper limit defining a range only in which the data source/producer is capable of generating dimension-less data values;
- defining a function that maps dimension-less data values of the data source/producer to a respective physical condition in the environment of the data source/producer;
- including information indicative of the lower limit, the upper limit and the function, respectively, in an electronic data sheet;
- providing the data source/producer with a data carrying tag, which tag includes information on the basis of which the electronic data sheet can be obtained;
- retrieving the information from the data carrying tag; and
- obtaining the electronic data sheet on the basis of the information retrieved from the data carrying tag.

According to a further aspect of the present invention there is provided a method of operating a field device system, wherein field device system includes a data sink/consumer, the method comprising the steps of:
- defining a lower limit and an upper limit for the data sink/consumer, the lower limit and the upper limit defining a range only in which the data sink/consumer is capable of being operated;
- defining a function that maps dimension-less data values for the data sink/consumer to a respective physical condition to be effected by the data sink/consumer;
- including information indicative of the lower limit, the upper limit and the function, respectively, in an electronic data sheet;
- providing the data sink/consumer with a data carrying tag, which tag includes information on the basis of which the electronic data sheet can be obtained;
- retrieving the information from the data carrying tag; and
- obtaining the electronic data sheet on the basis of the information retrieved from the data carrying tag.

It is noted that the aspects of the present invention relating to embodiments using data carrying tag(s) may be considered as solutions independent from the preceding aspects.

In preferred embodiments, the data carrying tag may include at least one of an RFID tag, a tag having wireless (e.g. RF) transmission capabilities or other known means of labeling and identifying products, e.g. one- or two-dimensional OCR codes.

In preferred embodiments of each of the above methods, as the information indicative of the lower limit, the upper limit and the function, respectively, at least one of the lower limit, the upper limit and the function as such may be included in the electronic data sheet.

In preferred embodiments of each of the above methods, the dimension-less data values may be analog data values.

The dimension-less data values may be also referred to a raw data. This will be discussed in further detail in connection with preferred embodiments of the present invention.

In preferred embodiments of each of the above methods, the function may map logical values corresponding to respective ones of the dimension-less data values to physical values. For example, the function may map logical values between 0 and 1 to physical range (e.g. temperature range, pressure range, or any other physical quantity).

In preferred embodiments of each of the above methods, the function may include at least one of
- a linear function, which linearly maps dimension-less data values to physical quantities and/or conditions; and
- a non-linear function, which non-linearly maps dimension-less data values to physical quantities and/or conditions.

In preferred embodiments of each of the above methods, the function may include an indication of a physical unit. Such an indication of a physical unit and/or the physical unit as such may be used, in preferred embodiments, in processing dimension-less data values, for example, in order to obtain one or more physical quantities and/or conditions in response to which one or more respective dimension-less data values have been generated.

In preferred embodiments of each of the above methods, as alternative to the function including an indication of a physical unit, the electronic data sheet may include - as separate information - an indication of a physical unit or the physical unit as such. For such embodiments, the preceding observations correspondingly apply also.

In preferred embodiments of each of the above methods, the function may map at least one of the dimension-less data values to error information representing an undesired physical condition. For example, the function may map one or more dimension-less data values or a certain, predefined range of dimension-less data values to an indication that the respective physical condition(s) is dangerous or a failure condition ("red value" or "red range") and/or that the respective physical condition(s) is close to a dangerous condition or prone to become a failure condition ("yellow value" or "yellow range").

In preferred embodiments of each of the above methods, the data source/producer may include at least one of a sensor, a unit including a sensor device, a device providing sensor data and the like as well as at least one of, as described in connection with preferred embodiments of the present invention, a microServer, a microGate, a microGateway, a far device, a microServer application, and an agent.

In preferred embodiments of each of the above methods, the data sink/consumer may be include at least one of an actuator, a unit including an actuator, an output device capable of effecting physical conditions in its environment and the like as well as at least one of, as described in connection with preferred embodiments of the present invention, a microServer, a microGate, a microGateway, a far device, a microServer application, and an agent.

In preferred embodiments of each of the above methods, the application unit may include at least one, as described in connection with preferred embodiments of the present invention, a microServer, a microGate, a microGateway, a far device, a microServer application, and an agent.

In preferred embodiments of each of the above methods, the electronic data sheet may be directly communicated from the data source/producer and the data sink/consumer, respectively, to the application unit.

In preferred embodiments of each of the above methods, the electronic data sheet may be directly communicated from a unit, which is located in communications path between the data source/producer and the data sink/consumer, respectively, and the application unit, to the application unit. Examples of such a unit located in a communications path between the data source/producer and the data sink/consumer, respectively, and the application unit include at least one, as described in connection with preferred embodiments of the present invention, a microServer, a microGate, a microGateway, a far device, a microServer application, and an agent.

In preferred embodiments of each of the above methods, the electronic data sheet may be communicated from a data base to the application unit. In such cases, the respective electronic data sheet may be retrieved from the data base on the basis of information indicative of the data source/producer and the data sink/consumer, respectively. Such information may be provided by the data source/producer and the data sink/consumer, respectively, by itself.

In preferred embodiments of each of the above methods, the system may include more than one application unit, wherein each of the more than one application unit may be provided a different electronic data sheet. Such embodiment allows that each of the more than one application unit may process dimension-less data values, according to the respective electronic data sheet, differently.

In preferred embodiments of each of the above methods, the system may include more than one data source/producer and/or more than one data sink/consumer, wherein the application unit is provided with electronic data sheets of the data sources/producers and/or data sinks/consumers and processes dimension-less data values accordingly.

In preferred embodiments, the data carrying tag may include the electronic data sheet or may include information on the basis of which information the electronic data sheet may be obtained (for example from a data base of the application unit; from a remote data base via, e.g., the Internet, from an XML template file, and the like) or on the basis of which information the electronic data sheet may be generated. In the latter cases the information may include information representing the properties of the data source/producer and data sink/consumer, respectively, including its physical unit, the range of valid measured values, and (if applicable) parameters describing the non-linear characteristic of the device; it may also contain additional "personalized" information like a device type ID, manufacturer ID, date of production, etc.

In embodiment wherein the electronic data sheet may be generated on the basis of information from the data carrying tag, the electronic data sheet generation may be accomplished, as described in connection with preferred embodiments of the present invention, by a microServer or by a microGate, preferably in form of a microAdapter, microBox or microIO.

According to a further aspect of the present invention there is provided a field device system comprising a data source, wherein the data source is adapted to generate dimension-less data values in response to physical conditions in an environment of the data source, an application unit, a network for digital data communications between data source and the application unit and an electronic data sheet including information indicative of a lower limit, an upper limit and a function, wherein the lower limit and the upper limit define a range only in which the data source is capable of generating dimension-less data values and wherein the function maps dimension-less data values of the data source to a physical condition in the environment of the data source; wherein the application unit is adapted to process a dimension-less data value communicated from the data source on the basis the information indicative of the lower limit, the upper limit and the function, respectively, in the electronic data sheet to obtain a dimensional quantity representing a physical condition in the environment of the data source, in response to which physical condition the at least one dimension-less data value has been generated.

According to a further aspect of the present invention there is provided a field device system comprising a data sink, wherein the data sink is adapted to be operated on the basis of dimension-less data values each of which indicating a physical condition to be effected by the data sink, an application unit, a network for digital data communications between data sink and the application unit, and an electronic data sheet including information indicative of a lower limit, an upper limit and a function, wherein the lower limit and the upper limit defining a range only in which the data sink is capable of being operated and wherein the function that maps dimension-less data values for the data sink to a respective physical condition to be effected by the data sink, wherein the application unit is adapted to process a dimensional quantity on the basis the information indicative of the lower limit, the upper limit and the function, respectively, in the electronic data sheet to obtain at least one dimension-less data value, the application unit is adapted to communicate the dimension-less data value to the data sink, and the data sink is adapted to effect on the basis of the dimension-less data value the physical condition.

The above observations concerning preferred embodiments of methods of the present invention correspondingly apply to the preferred embodiments of systems according to the present invention.

### Description of the drawings

In the following, preferred embodiments of the present invention are described with reference to the accompanying drawings, which illustrate:
- Fig. 1:: A prior art communication network as center piece of modem automation systems;
- Fig. 2:: a prior art structure of automation systems;
- Fig. 3:: a preferred embodiment of the present invention in form of a microNet network covering the full path of data points between data sources and data sinks in a measurement and control environment;

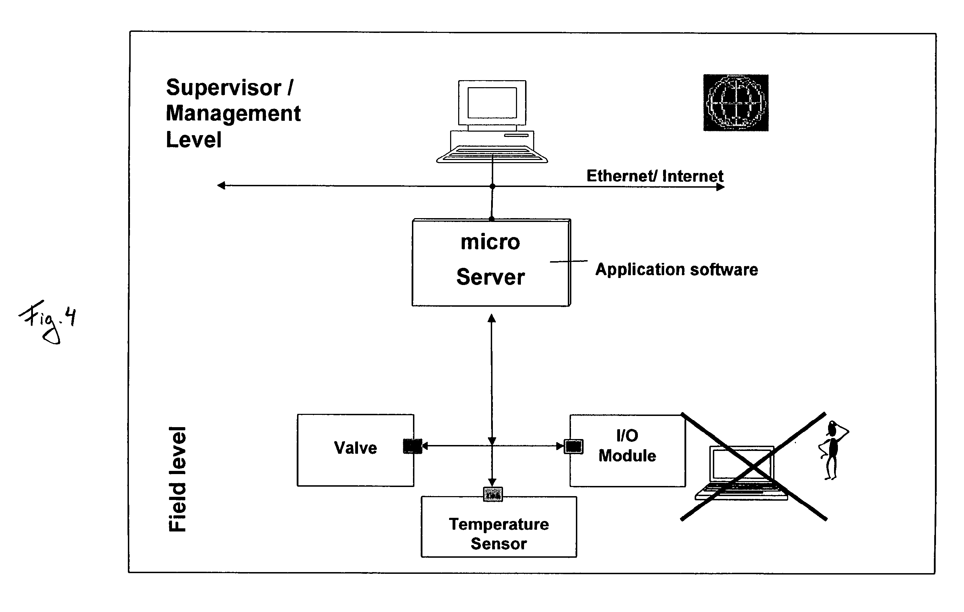

- Fig. 4:: a concept of a preferred embodiment of the present invention, namely a microNet networking concept (simple network design, noise immune twisted pair wiring in free topology, elimination of manual device configuration and direct Ethernet access);
- Fig. 5:: A preferred embodiment of the present invention including a modular integrated network in building automation composed of interconnected self-installed microNet networks running special applications;
- Fig. 6:: a comparison between Data Networks and Control Networks and the positioning of a the present invention (here as preferred embodiment in form of a microNet network);
- Fig. 7:: configurations of a Pyxos based network according to the present invention in form of a microNet network;
- Fig. 8:: examples of packing several low-resolution channels into 32-bit PCVs;
- Fig. 9:: Pyxos point memory map used by the present invention (here as preferred embodiment in form of a microNet);
- Fig. 10:: Physical communication channel redundancy by loop topology as contemplated by the present invention;

- Fig. 11:: Physical communication channel redundancy by rail topology as contemplated by the present invention;
- Fig. 12:: a mechanism of authentication contemplated by the present invention, here in form of microGate authentication;
- Fig. 13:: a microServer hardware architecture according to the present invention;
- Fig. 14:: a microServer software architecture from physical communication perspective according to the present invention;
- Fig. 15:: a microServer software architecture from an interprocess communication (IPC) perspective according to the present invention;
- Fig. 16:: a microGate hardware architecture (example of a room control unit) according to the present invention;

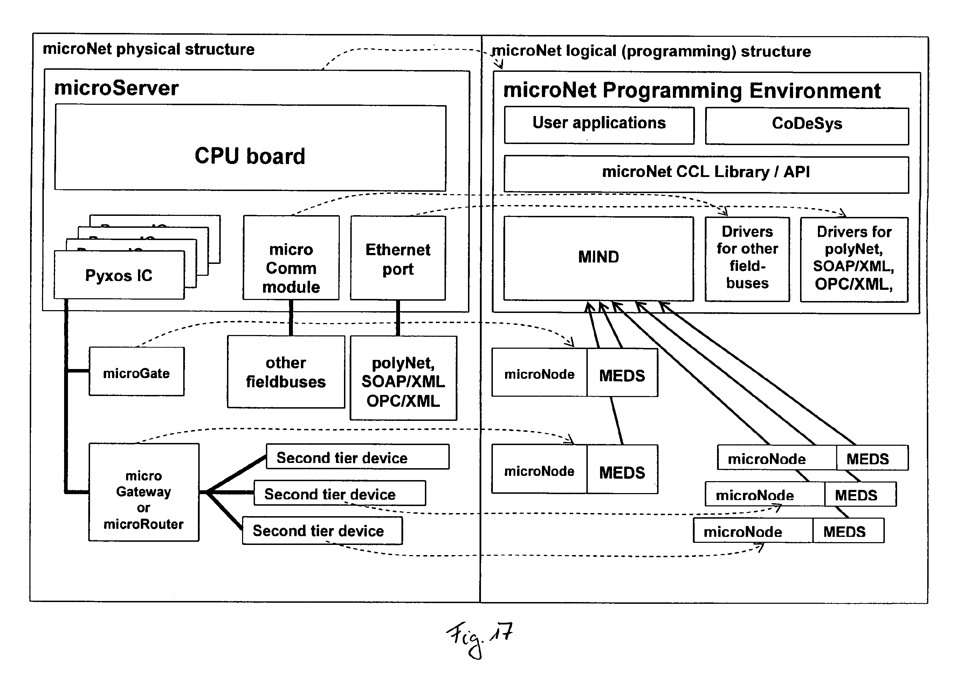

- Fig. 17:: duality of microNet physical and logical structures (each physical device has an associated logical microNode and is described by an MEDS) according to the present invention;
- Fig. 18:: a few of many possible configurations according to the present invention to attach sensors or actuators to a microNet channel;
- Fig. 19:: managing a device after power-up or reset according to the present invention;
- Fig. 20:: a PDA to serve as Web client for use with the present invention here for a microNet Assistant application;
- Fig. 21:: an example of a floor plan oriented Assistant GUI according to the present invention;

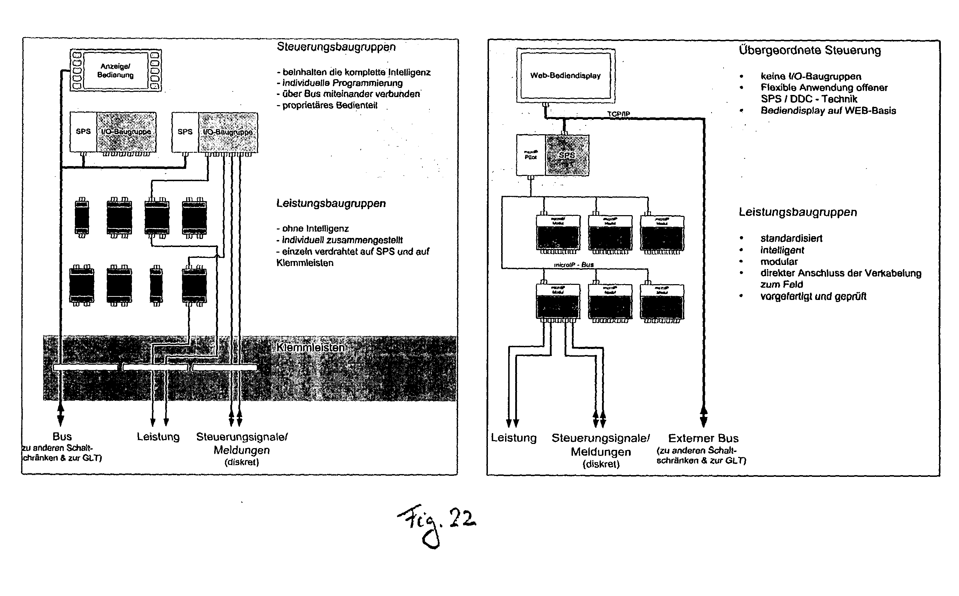

- Fig. 22:: an example of network according to the present invention (here a microNet network) in an HVAC distribution cabinet (on the left: all power modules have no intelligence of their own and must be wired to central PLC/stacks of I/O-modules which requires lots of wire, time and cost. on the right: all power modules are intelligent microGates and simply connected by microNet (MICROIP bus in the drawing) which leads to significant cost savings); and
- Fig. 23:: a preferred embodiment of an electronic data sheet according to the present invention.

### Description of preferred embodiments

In the following, the present invention will be described by way of examples with references to preferred embodiments which are referred to as microNets and/or microNetworking. The term microNet and other terms beginning with "micro" are used generically because the principles described here are of general nature. The prefix "F-" semantically relates to the principle of "second tier" or "foreign" or "far" devices. And, although the inventors use product names like, e.g. microNet, micro Server, microGate, microComm module, etc. for exemplary preferred embodiments of the invention, no dependency or limitation/limited applicability can be construed from such terminology regarding the fundamental principles and nature of the invention. In particular, the "micro" principle stands for the Pervasive Interoperability and the Plug & Play commissioning of so-called first and second tier field devices in automation systems.

The Glossary and the List of Abbreviations at the end refer to preferred embodiments of the present invention but must in no way be construed as comprehensive or limiting regarding the general nature of the described invention.

The present invention allows to create a low cost networking solution to interconnect and service heterogeneous control devices like digital and analog sensors, actuators, relay and solid state switches, LEDs or general purpose I/O points.

Solutions according to the present invention (such as microNet solutions) in environments may be used where a limited amount of data points or field devices must be tied together to perform a limited set of functions. In greater detail, the present invention provides solutions for, inter alia, the following three objectives: cost effectiveness, interoperability and openness of field devices and associated control and application software.

In order to achieve these three main objectives the present invention offers a single, coherent solution being a 100% persistent digital solution with, in general terms, no redundant A/D and reverse D/A conversion at the source, no analog signal wiring, no compensation circuitry, no analog I/O fieldbus modules. Signals are digitized right at their origin and transmitted as digital data through the network to the final application(s). This creates an opportunity for innovation in details and in the entire solution. For reasons of backward compatibility, however, legacy analog devices may be integrated taking advantage of the distributed nature of the present invention.

Digital communication networks are in the center of modem automation systems. They allow the efficient and reliable connection of field level devices (like sensors and actuators) to the control logic and processing tasks and are critical to the overall efficiency of the entire system. Parallel to the increasing complexity of automation systems the number and type of field level devices - or simply field devices - is increasing continuously. At the same time more and more applications require the direct access from the top network level to each individual field device in order to collect process data via Ethernet or the Internet in a distributed fashion and in real time, and process such data instantaneously. Examples are remote meter reading, control of an elevator or control of an entire crude oil refinery process.

In Building Management systems, for example, a "medium size" automation system today comprises approx. 10,000 field devices whose data must be made available throughout the distributed network without delay.

One of the main difficulties in this rapidly growing market is the efficient and cost effective installation and commissioning of field devices in the network. There are three reasons for that:
- Generally, field devices transmit or receive only simple analog current or voltage signals. In order to transmit such "raw" signals through a digital network each field device requires a special hardware and software interface.
- The interface must be "programmed" to fit the respective field device. As a consequence, the installation or the replacement of a device require costly field programming each field device must be logically "integrated" in the control program by a time consuming manual configuration process. This requires complex software tools and a substantial design and integration effort.

The lack of an efficient way of field device integration has implications regarding the entire structure of a traditional automation system. Automation systems are typically organized in a pronounced hierarchical structure in which the information generated by the field devices is processed in several sequential steps and is eventually passed on to a central supervisory system structure.

In traditional systems several sensors and actuators are bundled together in a single interface module. The interface converts the analog signals into data ("digitalization") and passes them on to the communication network - usually a "fieldbus system". In commonly used approaches of the prior art, the top level is formed by a central control unit or controller which itself is connected to a management computer or other control systems. In most cases this is a so called PLC or Programmable Logic Controller (e.g. compact unit which is programmed by the system developer or an Industrial PC). Within the central controller resides the entire intelligence which includes the application program(s) and the underlying system software to manage the communication with the attached field devices.

An indirect consequence of a hierarchical architecture is that the system becomes so inflexible that each modification of the application software requires an additional development effort and associated cost. Further, the device commissioning procedure of the central controller will allow the access to the individual field devices, but only with exceptional programming effort. In case the data arriving from the field devices are filtered and preprocessed on their way to the controller in order to reduce computing load, the transparency in the network will be lost entirely.

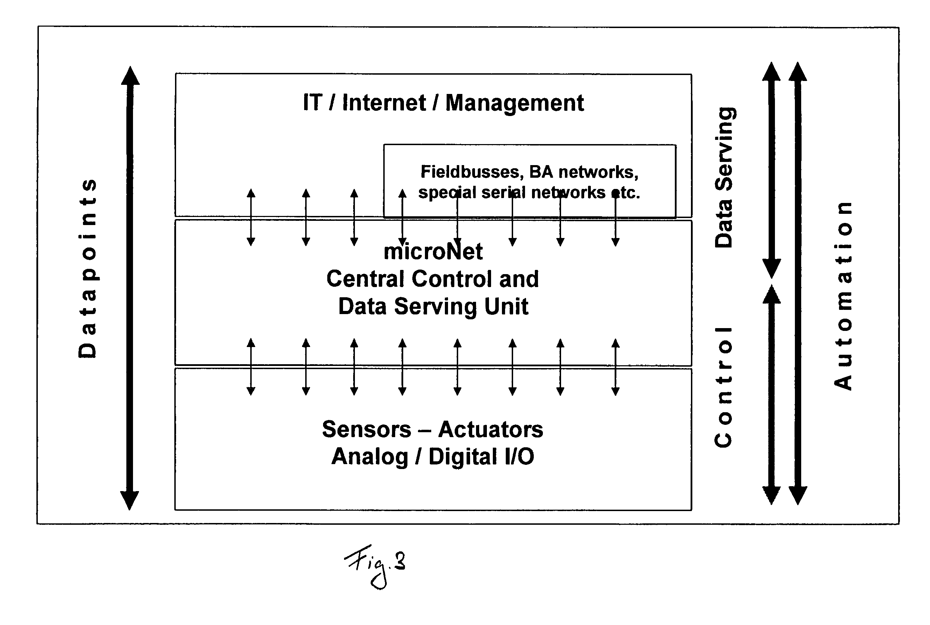

In contrast thereto, in general all (digital) data points originating from input providing devices sensors and operating on e.g. output providing devices (e.g. actuators) flow through the microServer within a single microNet. The logical path of a piece of data traveling from its point of origin through the microServer to the User/Control/Monitoring application is called a microNet channel. (see Fig. 3)

Channels are used in the procedure of "connecting" the information points of an application program in the micro Server to the data points of microNet field devices, designated microGates. If the information concerns a device in another microNet belonging to the same microNets (i.e. a networked collection of microNets) the data points will be amended by additional address and service information and are passed on to that other microNet. If the data is meant for transport over a standard (i.e. prior art) building network or field bus system like LON, EIB, Profibus, Modbus, etc. the microServer acts like a gateway and converts the data to the respective data and protocol formats. If, however, the data shall be received, processed and interpreted by any computer system, typically a PC, or a remote tool, the data will be converted to one of the popular open IP data formats used with Ethernet or the Internet or World Wide Web, e.g. OPC/XML or SOAP/XML, HTML.

It is predictable that the technology of integrating sensors and actuators will play a key role in the digital automation technology of the future. This opportunity is addressed by the present invention by an innovative device concept which is based on field devices that generate well defined digital information ("digital field devices") in conjunction with a flexible and modular communication software and an innovative data processing technology.

Preferred embodiments of the present invention, such as concepts used by microNet is best characterized by partitioning automation systems in a modular way into small and manageable self-installed, plug-and-play, networks each consisting of up to 32 field devices. This is achieved by distributing the intelligence throughout the network more efficiently. A small but decisive portion of the data processing in the central controller is distributed in the field devices, at very little additional cost. A sensor, for example, no longer represents its measured values as a simple current or voltage signal but as a sequence of digital data. Further, the sensor comprises all self-descriptive information which today must be configured manually. The connection between the field device and the network hardware may be implemented using a new and innovative communication technology, the PYXOS™ system. This leads to an entirely new, distributed and highly efficient control network structure with, inter alia, the following features:
- Since the field devices are capable of communicating digitally the interface modules and - in most cases - the entire field bus level as used in most I/O systems today are obsoleted the inflexible PLC is replaced by the microServer, a universal, user programmable unit with Ethernet/Internet/Web access. It is capable of installing the field devices and connecting their channels largely without a tool by utilizing preconfigured and stored configuration information.
- It facilitates free topology wiring and low cost installation and thus supports the self-installation concept in an ideal way.

The connection of several microServers among each other and with the top level supervisory or management system is usually established via Ethemet/Intemet whereby this universally used communication channel can be efficiently employed for field level devices as well. As an innovative feature microNet supports full data transparency which allows the direct access of any field device regardless of the physical channel it is attached to.

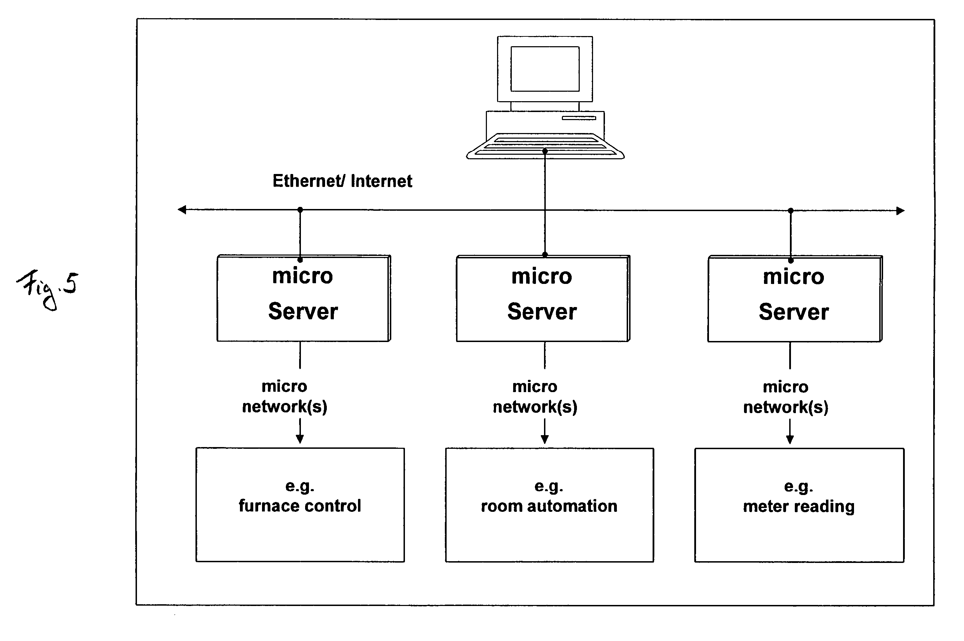

By the microNet plug & play, self-installation method and the placement of self-descriptive information in the field devices the design and installation effort is reduced significantly and will yield the decisive advantages over traditional methods. The field devices are deliberately kept simple and their "intelligence" is restricted to features like exposing their internal structure and the structure of data points (self-description) to the microServer, linearization of data, data filtering, data reduction, data preprocessing, buffer handling, error and alarm generation, and, of course, communicating. By the possibility to eliminate any application function the field devices can install automatically and can be "intelligently" connected to their respective applications by a procedure designated "microGate Smart Connection" (MSC). In addition, large and complex networks can be partitioned and modularized into partial, largely autonomous subsystems which increase the overall efficiency and increases serviceability and maintainability. (see Fig. 5)

Examples for such "autonomous" subsystems in building automation today are the heating, cooling and ventilation control systems, room automation in a privately or commercially used building, the monitoring of an underground garage in respect to toxic gases, the remote reading of gas, water and electricity meters via Internet, the triggering of an alarm when an unauthorized person is entering a dangerous area, smart load shedding in a network of electrical devices like drives or ovens depending the energy cost, etc.

According to preferred embodiments physical measurement signals are converted into digital information directly at its source, the sensor device. Conversely, physical control signals are generated from digital information directly at its destination, the actuator device. Between these "physical points of entry and exit" all communication throughout the network is digital This saves point to point cabling of analog signals and eliminates the need for multiple A/D and D/A interface modules in the system.

The present invention contemplates a comprehensive yet compact file of self-descriptive device and channel information referred to as "microNet Electronic Data Sheet (MEDS)": An MEDS even fit in the smallest microprocessor and yet contain all information to describe any sensor or actuator. More complex field devices like gateways or hybrid sensor/actuator devices may contain several MEDS files.

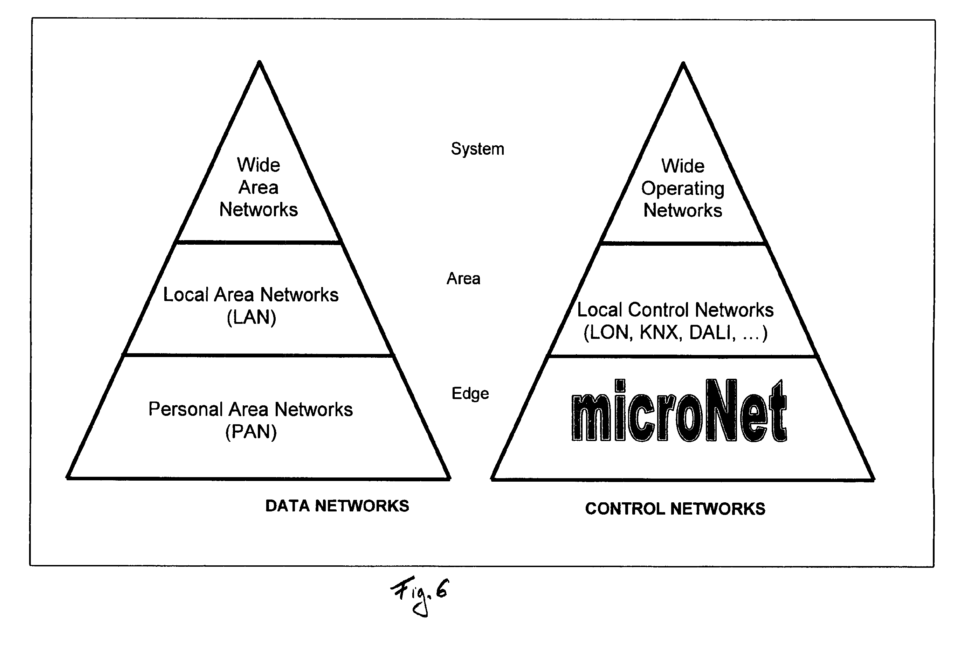

The present invention proposes a low cost, yet high performing field level network to interconnect, in preferred embodiments, a limited amount of field devices (e.g. up to 32 in a single microNet) to a controlling device called the microServer. This approach limits, from a practical perspective, the complexity of managing the field devices especially with regard to device installation and channel connection time and effort. From a technical perspective and from a market point of view, the present invention addresses the application space below the current market of local control networks, which comprises virtual all intelligent sensors and actuators (see Fig. 6)

From a number of available low level protocols (CAN, ASi, M-Bus, Modbus/RS485, Mod-bus/IP, SPI, I²C, Pyxos) the last one was selected for. However, microNets can also be based on, e.g. RS485 or IP or LON protocols. Although not deterministic, the latter could be an attractive choice when low cost IP connectivity becomes available. In any of the above cases, some of the higher protocol features embedded in, for example, the Pyxos protocol may be implemented in the microEngine firmware.

The Pyxos built-in functions allow for a system performance, which will cover even sophisticated applications, e.g. in the process industry or in robotics:
- Automatic discovery and installation of networked devices
- Device recognition on connect to the network
- Deterministic (synchronous) Time Division Multiplexing Access protocol (TDMA) high/adaptive performance depending on the number of devices attached
- Free topology wiring
- Power distribution over network wires (typically used for powering sensors) unique physical ID
- Management of up to 256 different indexed network variables per field device, 128 each for Reading and Writing
microNet channel (i.e. data or parameter) types for all physical units are supported by a compact representation of international units (SI units) as defined, for example, in the IEEE 1451.2 standard. The use of standard types supports the invention's interoperability. Further, it is considered to support for so-called "foreign" or "far" devices which are connected through a microNet gateway. This approach leaves the device designer and the application developer with all possible degrees of freedom.

In a microNet channel the data or parameter types are not converted to some internal computational format, not in the microGate, not in the microServer or any other, but are retained until a control, gateway or monitoring application requests conversion into a different format. This demand driven method of handling data and parameter formats reduces the computational system load significantly and hence increases the overall performance. microNet field devices are installed by simply connecting the device to the network (plug & play). Additionally, using a Laptop or Handheld tool in conjunction with a Web server residing in the microServer "smart connections" can be established between the data channels of the field devices and the microServer application(s).

Conventional analog sensors and actuators can be included in microNet networks by attaching them to generic or general purpose I/O devices. Such devices may support fixed input and output signals (microIO) or may support programmable industry standard input and/or output signals (microAdapter). An innovative sensor and actuator device recognition and identification method using RF tags and associated reading devices is used to merge the identity information of the sensor/actuator devices with the microGate identity information (MEDS). This feature allows an economic migration path from using legacy analog sensors and actuators and modem microNet digital field devices in the same microNet while using identical installation methods.

In order to protect an installed network or partial network from manipulations (e.g. meter installation, exchange of malfunctioning devices, etc.) an authentication method may be used to prohibit unauthorized access of applications to data channels. This mechanism can be effectively used to "freeze" partial or entire applications and their associated field devices with regard to modifications after acceptance by the customer. In other cases, for example, it can be applied to "protect" partial or entire hard- and software solutions against piracy attempts.

In order to make the data transfer secure regarding tampering or fraudulous manipulation within a single microNet or among several microNets or even to a remote supervisory or management system a flexible data encryption method may be optionally employed.
microNets will be able to support safe data processing and the execution of safe state operations in accordance with the international safety norm IEC 65108. A single microNet can either be safe or non-safe. However, it is possible to mix safe and non-safe microNets in a single microNets.

Interoperability is one of the outstanding features of the present invention. According to what is known to the authors as "state of the art" today, microNet raises the interoperability concept to a new and innovative level which is universal and encompasses (virtually) all microprocessors, physical channels, serial protocols and control applications. The inventors call this functionality "Pervasive Interoperability" (PI).

Pervasive Interoperability in a network is achieved when it reaches across at least one of:
- several (in principle all) microprocessor platforms (from 8 to 64 bit)
- several physical communication media
- several serial communication protocols
- several (distributed) control applications
- several (distributed) IT applications
whereby interoperability may be defined as the functional interworking of two or more of:
- several field devices from several device manufacturers
- several microServer hosted applications from several developers or providers of application software
- several PC hosted IT applications utilizing one of the self-descriptive IP protocols standards like SOAP/XML or OPC/XML

Interoperability may be achieved without the necessity to write device (microGate) specific or application (microServer) specific code.

In order to achieve Pervasive Interoperability, microNet provides four building blocs, which may be - for example - free of charge and/or may be downloaded from its Website protected by, e.g., a "Shrink Wrapped License" (i.e. the user must acknowledge that he or she has read and accepted the license text before the download is initiated):
- a microGate Developer's Manual including schematics and layout examples
- microEngine firmware which is specific for the most popular microprocessors in industry
- an MEDS tool for manufacturers and associated documentation
- the Channel Configuration Layer (CCL) API Developer's Handbook

The Pervasive Interoperability concept employs interaction of embedded firmware modules/structures such as microEngine, microNet protocol, MEDS, and microServer firmware:
(1) The microEngine will be provided as an installable ready to use firmware image for the most popular microprocessors and will be ported, and, if necessary, upgraded to new firmware versions as new microprocessors appear on the market. When further developed and enhanced backwards compatibility and interoperability of the microEngine will be retained! The micro Engine may be provided as so-called microEnginel (an e.g. "light" version) for e.g. 8 bit microprocessors, microEngine2 (a "full" version) for 16, 32, or even higher bit microprocessors.
(2) The microNet protocol ensures, in combination with further components of the present invention, interoperability, Therefore, the protocol's characteristics should not be modified interoperable developments - even though such "copies" would be prohibited by license agreement. However, in the protocol some user defined functions are provided which do allow custom extensions or enhancements without violating or impairing the basic microNet interoperability. Internally, provisions of enhancements for future use have also been taken. When further developed and enhanced, backwards compatibility and interoperability of the microNet protocol will be retained.
(3) the MEDS may be edited by the developer/manufacturer with a form-based MEDS editor and compiled/linked to the microGate application. It is the self-descriptive file for any microGate in whatever function: microGate, microGateway or microRouter. In the latter two several MEDSs will be placed, each representing an second tier device or F-device
(4) The microServer is described in more detail below. In preferred embodiments it will be fully featured so it can address virtually any control task in industry (timing constraints permitting). The principles of its operation and, in particular, the architecture of the CCL API and the Assistant Web server application are, inter alia, provided to support Pervasive Interoperability. It may be designed in such a way to assure utmost flexibility regarding the addition and removal of features and functions, and hence will lead to a whole family of microServers. When further developed and enhanced backwards compatibility and interoperability of the microServer firmware will be retained

Openness is a popular concept in the software community because it allows free of charge access to key source code (like LINUX) but is typically restricted when it comes to commercial use. However, openness and interoperability do not go together very well: a single bit changed somewhere may destroy interoperability completely. That is why the present invention contemplates restricting openness in such a way that Pervasive Interoperability may not be impaired by, for example, a device manufacturer or an application programmer. More pragmatically, however, openness is often defined as a "fair" and "non-discriminating" commercial access to all components of a technology in order to facilitate participation in an open market. I.e. to provide hardware and software products for an interoperable system. By this market oriented definition microNet can be called an open, interoperable system. In fact, it is the declared objective of the inventors to create a widespread, global, universal, cross-industry, open and interoperable control networking standard.

The architecture of Data Networks can be compared to Control Networks, level by level. In recent years the number of RF based network technologies for mobile devices (like GPS, GPRS, UMTS) has exploded which has created huge new markets for personal devices and service providers. Although on a smaller scale, the same can be expected for small embedded networks hierarchically "below" the established building automation networks and industrial field buses in order to control and aggregate an increasing number of field devices and physical data points. To this end, recently commercial developments have been made available. For example, the Echelon Corporation has recently released a new low cost communication chip named Pyxos.

Pyxos is targeted primarily at small embedded systems mainly of proprietary nature using free data formats. Although the Pyxos technology targets embedded devices, e.g. sensors and actuators in a copying machine, it is very well suited as a basis for the microNet concept which aims at open and interoperable low cost, yet powerful and scaleable networking at the field device level.

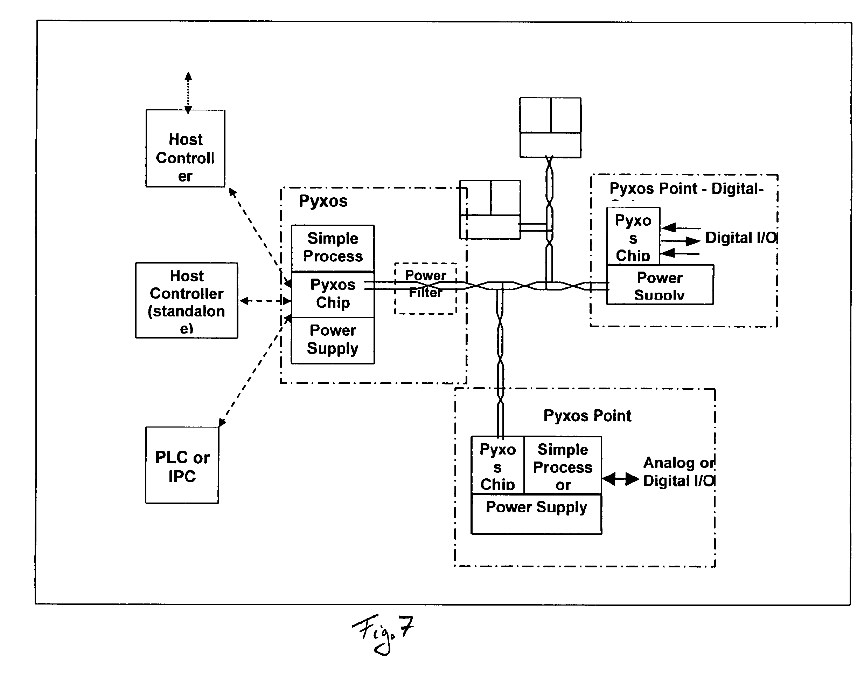

The heart of the Pyxos technology is a small 20 pin IC (5 x 5 mm) which runs a Time Division Multiplexed Access (TDMA) protocol at 312,5 Kbits/s over an unshielded twisted pair of wires. It requires a host processor with at least one SPI interface to run additional protocol services and the network applications. Since most 8 bit, 16 bit or 32 bit microprocessors feature an SPI master interface virtually any combination is possible to optimize cost and performance. A Pyxos network consists of one Pyxos pilot and up to 32 Pyxos points. (see Fig. 7)

When complemented with a low cost 8-bit or sometimes 16 bit host microprocessor and standard microEngine firmware each Pyxos point may become a microGate, i.e. a microNet sensor or actuator. The performance requirement of a Pyxos pilot, however, typically demands the use of a 32 bit microprocessor. In the implementation of a microServer the Pyxos Pilot and the host controller functions are combined within a single powerful 32 bit microprocessor, for example of the ARM7 or ARM9 type. This enables the microServer to not only manage powerful networking functions but also run control, data processing, monitoring, gateway and communication applications simultaneously.

A comparison with "older" systems reveals, that Pyxos comprises many built-in-functions and advanced features. Features that are particularly useful for the objectives of the present invention include:
- a deterministic TDMA protocol which is indispensable for time and response critical applications
- a built in 48 bit MAC ID which facilitates self-installation and comfortable Web tool based channel connection methods
- large number (256) of indexed network variables per Pyxos point, 128 for Read and 128 for Write operations which leaves many options to define an interface for a set of interoperable system functions as well as user definable channels groups for data and parameter transfer
- free topology wiring which is the most flexible and widely applicable wiring structure operates on 24 V AC or DC (50 Hz to 60 Hz)
- 24V AC or DC link power as a means to deliver power to the network devices through a transformer/filter unit. On the device end power can be decoupled by a low cost power isolator
- high transmission rate of 312.5 Kbit/s
- "industrial standard" active and passive noise characteristics
- "industrial" operating temperature which will make microNets deployable anywhere use of SPI Interface for the host connection. SPI is the most popular short range serial interface in the industry, supported by virtually all microprocessors
- small size (5 x 5mm, 20 pins) which allows extremely small packaging especially in microGate PCBs

The microServer may be considered as the heart of the microNet network. It can be defined as electronics and firmware of a microNet controller and application server which additionally performs the functions of a gateway as well as a communication and presentation server for a variety of other networks and associated data formats. The microServer, may perform, inter alia, following functions:
- It runs the application or several applications which have been specially developed, debugged, compiled, tested and optimized for a particular set of field devices or microGates with an embedded microEngine. Such applications may either use the native CCL API interface (C++ applications) or the CoDeSys 3.0 interface (CoDeSys IEC 61131 applications).
- It runs the microNet protocol which assures full interoperability of the microGate field devices with regard to MEDS defined channels.
- It runs the MacroNet protocol in the event that several microServers are interconnected to form a microNet.
- It performs self-installation and Web based "smart channel connection" (SCC) process, by means of an "Assistant" Web server application.
- It serves as a general purpose "IP formatting" server to (re)format data and parameters for further processing, monitoring, visualization and HMI interaction, preferably using open, self-descriptive protocols like OPC/XML or SOAP/XML.

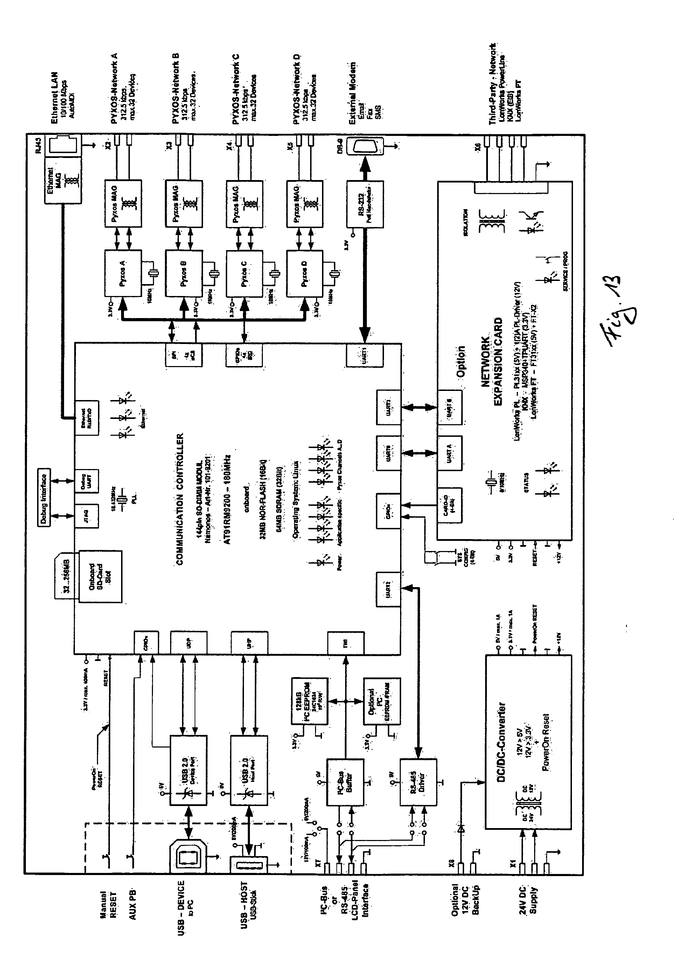

The microServer may be built of "state of the art" electronic components, in particular the most recent 32-bit processors, for example ARM 7 or ARM9. In the first version of the microServer the ARM 9 processor, large memory (up to 32 Kbyte of RAM and 64 Kbyte of FLASH EPROM, and a number of indicator LEDs are packaged in a compact core module which is mounted vertically in a socket on the main board in order to save PCB space. The processor supports multiple serial interfaces like SPI master and/or SPI slave, I²C, RS485, RS232 with modem support, USB master and/or USB device, and is capable of running modem high-performance, multitasking Operating Systems like LINUX. In order to read and write data from/to the microNet the SPI interface services up to four Pyxos front end communication processors. (see Fig. 13)

The microServer can be optionally equipped with a microComm module which is, for example, vertically installed in a socket on the main board. It typically serves as a direct gateway to a (preferably) high-speed serial protocol like CAN, Profibus, LON-FT, Modbus/RS485 or even a proprietary point to point bus. Since the microComm module can accommodate serial speeds of several 100 Kbits/s it offers a much higher performance than the microGateway concept described further below. The microComm module may also be used in such cases where the microServer is used as a dedicated controller and application server for running applications on a special physical channel, e.g. LON over Powerline, Modbus over fiber optics or a wireless ZIGBEE network. A third way of using the microComm module would be to link the microServer with a third party PLC for data exchange in an existing application. Logically, the field devices behind the microComm module are treated as "foreign" or "far" devices and participate fully in the microNet channel concept.

The software architecture of the microServer is described below.

The microGate may be defined as electronics and the associated firmware of a microNet device irrespective of its form factor. A microGate has a simple structure. It is designed in such a way that it is easy, straightforward and very cost effective for manufacturers of sensors and actuators to add a microNet interface or convert an existing serial communication interface to the microNet standard. In order to facilitate the migration from existing field devices to the microNet standard generic microGates, which allow the connection of conventional analog devices and/or digital input/output signals will be provided by the inventors and others. Multiple sensors or actuator devices can be handled by a single microGate for reasons of cost and form factor. A/D and D/A signal conversion may be of any resolution up to 32 bits, depending on the measuring precision of the sensor or the operating precision of the actuator. Since most 8-bit or 16-bit microprocessors have an SPI interface there will be many implementations of microGates depending on the preference of the OEM with regard to his choice of development tools (typically Assembler or ANSI C), size of memory and I/O interface.

Each microGate may contain a microEngine which is a firmware module which may be downloaded from a Website under license. The microEngine runs the microNet protocol, organizes buffers, monitors performance and provides state and alarm information to the microGate indicator LEDs as well as to the microServer. It also services the microGate API which provides a well documented interface to the user application. Depending on the capabilities of the microGate microprocessor, preferred embodiments may include a full API version which provides a rich set of API functions and a light or limited version having a limited set of API functions, generally sufficient for a single sensor. In any case, they guarantee full microNet interoperability.

Each microGate includes at least one MicroNet Electronic Data Sheet (MEDS) comprising one or more files or tables of self-descriptive information about, for example, the manufacturer, device type, model number, calibration information (optional), supported channel groups for data and parameter exchange and associated data types (for analog values). In a microNet the universal data type is used, which is described by its physical unit (typically represented in SI format according to the IEC 1451 standard) and three parameters, namely the absolute value of a (1) upper limit (UL) and a (2) lower limit (LL) (both typically represented in floating point format), and (3) the number of significant bits (NB) by which the values in the range (i.e. between UL and LL) are represented in binary format. This creates a non-empty range of representable values. The parameterized data type (ULB) is a superset of most data types used in control applications, and, in particular, comprises the following popular data formats:
- standard IEEE 1451 SI-units in floating point format (strong data types)
- standard IEEE 1451 SI units in fixed point format
- standard IEEE 1451 SI units with upper and lower limits in binary format
- manufacturer specific data types (e.g. LONMARK, KONNEX, etc.), mostly in fixed point format
impractical in a high-performance network because of the overhead of digital representation and processing related to strong data types.

For example, the IEEE 1451.2 standard (1) mandates that a field device must communicate using strong data types which are semantically fully defined. In contrast, the microNet protocol additionally supports so-called "relaxed data typing" like in (2) and (3) which means that the data channels communicate raw data (i.e. "binary values") which are semantically interpreted by the application in the microServer, either as input data received from a microGate sensor or as output data sent to a microGate actuator. If the data types of input and output channels, e.g. in a control loop, are different then the control application which uses the data has to perform a data type translation (conversion, reformatting). This semantic interpretation of input and output channels as required by the application is termed "Data Typing on Demand" (DTD). DTD allows to limit unnecessary data translations and computations and as a result, increase the overall performance of microNet systems. DTD is also a necessary component of the Pervasive Interoperability concept.

In the event that the microNet supports second tier devices through a microGateway, e.g. LON or KONNEX, the microGateway is used for reformatting the native data types of F-devices into the universal data type (ULB) of microNet. As long as both native and universal data types are linear this operation does not require any rescaling, table lookup or other calculations during dataflow:, all operations can be set up during the device configuration phase.

The MEDS may be created by the manufacturer of a device with a tool supplied by the inventors and is loaded into the microGate together with the application. However, the MEDS file can also be downloaded from or uploaded to the microServer by microNet File Transfer. This download mechanism is typically used with generic devices like analog and/or digital I/O modules or microGateways which typically contain more than one MEDS. It may also be used in case of a firmware field upgrade by the manufacturer.

After a microGate has been self-installed (i.e. it has been assigned a unique logical ID) the microServer requests an upload of its MEDS in order to learn its channel structure and use that information for the partially automatic, partially interactive "smart channel connection" (SCC) procedure which "matches" the microGate channels with the required application channels of one or several applications. This procedure how to connect channels will be described in more detail below.

The present invention may support the concept of "Second tier devices". Such devices communicate with a microServer through a microGateway. For simplicity they are called F-devices (for "foreign" or "far") and each of these F-devices is represented by a logical device residing in the microGateway, called a microNode. In contrast to N-devices (for "native" or "near") which are normal microGates which host one and only one microNode. In case other types of field devices may be integrated into the microNet, typically using different serial protocols and different physical media (e.g. LON Powerline or enOcean RF), then a special microGateway has to be employed which contains one or many microNodes each representing a F-device which can only be reached through such microGateway. Subsequently, each F-device that is represented by its microNode and its associated MEDS file(s) in the microGateway will participate in the microNet protocol with all its features and properties as if it were a N-device. A limitation might be that a microGateway which supports e.g. 64 F-devices could be limited to 1.5 channel groups per F-device on the average. However, since many applications do not require the performance of an N-device it is possible to share/multiplex a microGateway channel group assigned to an F-device and thus increase the number of F-channels. Since the philosophy of microNet is to use simple devices with only a few data and parameter channels, this microGateway approach to F-devices is very appropriate in most cases. The main advantage, though, is that F-devices are logically treated in the very same way as N-devices. Which means, in particular, they participate in the microNet Pervasive Interoperability concept.

One special type of a microGateway is a microRouter which accommodates "far" or F-microGates, i.e. it uses the microNet protocol to communicate with a set of second tier microGates. It typically features a powerful microprocessor, e.g. an ARM7 controller with two Pyxos chips, one for N-connectivity and one for F-connectivity. As there is only one timeslot available for communications on the N-side this decreases the throughput traffic by approximately a factor of 1/n where n is number of timeslots used in the N-microNet. One measure of improving this situation is buffering the information when it comes in bursts from the F-side of the microRouter. Another measure would be the processing of the information right in the microRouter, in case it is equipped to run a special agent for such task. A third measure would be to equip the microRouter with more than one Pyxos chip and thus double or even multiply the throughput on the N-side of the MicroNet.

Normally a microRouter generates timeframes on its F-side in a cyclical fashion. But in some special cases this mode of communication may be not optimal, e.g. when F-devices are wireless and battery powered and will typically generate low data traffic. Then the microRouter can be set into polling mode generating only timeframes on demand, which will significantly reduce the power consumption of the battery-powered devices.

In many cases mostly when sensors with low power consumption are concerned the microGate may take its power directly from the microNet wires through a Link Power AC/DC transformer with specially dimensioned filtering circuitry.

A microNet network architecture includes first tier and second tier devices and can be viewed conceptually from a hardware point of view and the corresponding software point of view as a duality of microNet physical and logical structures. Each physical device has an associated logical microNode and is described by an MEDS. While there is typically a limitation regarding the number of first tier devices on an microNet network when a synchronous TDMA protocol is used (like in Pyxos), there is in principle no such limitation with regard to second tier devices, especially when a second tier serial protocol is used, e.g. LON or KNX.

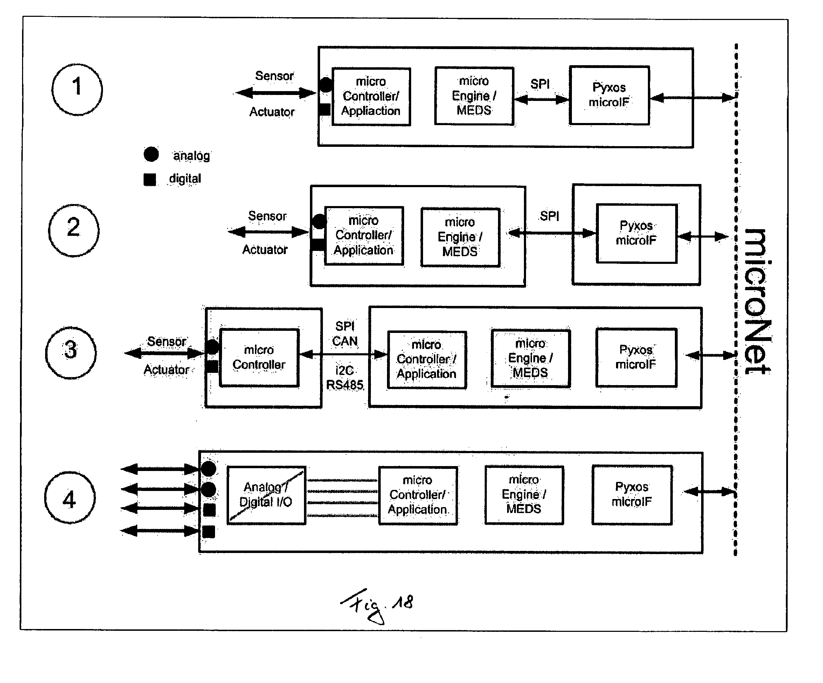

The microGate comes in many different form factors depending on the shape and size of the field device, its type and size of connectors, or whether the Pyxos chip is internal or external of the device enclosure. Many possible configurations to interface sensors or actuators to a microNet network channel can be created, e.g. (see Fig. 18)
(1) a normal device or microGate typically from a single manufacturer including all necessary components: its own microprocessor of choice which runs the application, a (loadable) microEngine, and a microInterface circuit, either integrated by the manufacturer on the microGate PCB or as a pluggable microInterface module.
(2) a conventional sensor/actuator equipped with a microprocessor - which is typically needed for calibration and for linearization of analog signals anyway. However, instead of the normal D/A converter for generating 0-10V or 0(4)-20 mA analog output signals, it now uses its microEngine and its SPI interface to connect to an external microInterface device connecting to the microNet network. The advantage of this configuration is that it requires the least amount of design effort to make existing devices "microNet ready".
(3) a configuration similar to (2), when the sensor or actuator is already equipped with a digital interface other than microNet. In this case the connection is even simpler, since no modifications are required in the sensor or actuator. It simply connects to a generic microGate - called microBox - through a standard serial interface like e.g. SPI, CAN, I2C, RS232, RS 422, RS485, etc. The microBox has its own microprocessor, microEngine, and microInterface, and the MEDS and application can be downloaded from the microServer.
(4) a configuration that even goes beyond configurations (1) and (3) whereby in a monolithic microGate a generic set of analog and/or digital I/O-points are supported. The microIO products may come, for example, with a generic application software which can be "personalized" and parameterized by the MEDS downloaded from the microServer via the MicroNet File Transfer Protocol (MFTP). Naturally, this software can be deleted by the user and replaced by his/her own application software.

One way of making it very easy for a designer or OEM manufacturer to make the transition to microNet is to develop or purchase a small microInterface module (which can be plugged in or soldered) to be placed horizontally or vertically on the microGate PCB e.g. using a pin connector. The microInterface module contains a Pyxos chip, a transformer, an SPI and power interface and (optionally) some serial memory. The advantage of using a microInterface module is that, for example, a standard device may be optionally marketed and used as an analog device or as a microNet device.
microGates are typically simple devices, i.e. they run relatively simple applications which perform data manipulations (linearization, filtering, reduction of updates per time, etc.), and support only a few data channels. However, there is a second category of microGates which execute more complex and, in particular, time critical applications like controlling drives, fast positioning, rapid opening or closing of valves, or performing a safe state function. Such devices typically run their own (fast) control loop(s). In this case the microServer supplies the microGate only with control values in the form of set points, which must subsequently be autonomously reached and stabilized by the microGate's local control loop.

Another way in which the microServer can deal with fast control devices is by communicating through its much faster microComm or IP communication channels.

The present invention suggests a microNet bus in form of a (fast) two-wire Master-Slave network. The microServer is the bus master (which includes a Pyxos communication chip), the slaves are up to, for example, 31 microGates (which are also equipped with a Pyxos chip each). The microServer generates a Time Division Multiplexing Access (TDMA) protocol at a rate of 312,5 Kbit/s. This means that in a cycle time of less than 25 msec (depending on the number of microGates) up to 32 microGates can be simultaneously polled for data and updated with new data. Each set of data contains 2 times 4 bytes of information. The cable consists of an unshielded twisted pair of wires (from 22 AWG (0,65 mm) up to 44 AWG (1,3 mm)) which is used by many serial busses and networks, i.e. bus cables are a low cost item. When the network is terminated with a single terminator in free topology wiring the total wire length is limited to 100 meters, and the maximum distance between any two microGates must not exceed 50 meters. However, if a bus structure is used with termination on both ends the wire length may be up to 500 meters. Since the first version of the microServer supports up to 4 Pyxos channels both topologies may be mixed in order to create a "control center" for local and remotely located devices. Using a mixed topology is also ideal from a wiring point of view to build MACRONETS which consist of microServers using bus topology for long distances (e.g. floor lighting and smoke detectors in floors) and others which service a few rooms using free topology. It is noteworthy that the wiring is polarity insensitive which means that the installer can connect the wires in either way without impairing the communication. The network operates on 24 VAC at either 50 Hz or 60 Hz. Optionally, by means of a special Power Supply/Noise Filter combination power is carried on the bus in order to supply a limited number of nodes with power coupled from the network. This feature is called Link Power and provides the possibility of providing an inexpensive power supply for multiple sensors on the network. E.g. microGate sensors can be powered with up to 100 mA @ 3.3 VDC. The microNode will sustain 8 kV common mode electric discharge on contact and 15 kV on air (spark) discharge when equipped with a frond-end coupling transformer, thus fulfilling the requirements of the ESD (electrostatic discharge) standard (IEC 61000-4-2). Also with external transformer microNets are immune to 3 kVrms conducted RF (IEC 61000-4-6). Without external transformer the microGate can sustain only 1 kVrms on the average. Therefore microNets will typically always use transformer isolation.

The Pyxos protocol has been designed in such a way that it will be possible to use short range, low power Radio Frequency as a medium. It is planned to select either a proprietary standard in the 866 kHz or 2.4 GHz band as a carrier or purchase/implement one of the then available stacks of an open RF protocol (enOcean, ZIGBEE, Nanotron, etc.). It is also expected that Echelon Corporation as the inventor of the Pyxos technology will come out with its own RF solution in the Ultra Wide Band (UWB) frequency range within the next few of years. Through modem SP (signal processing) chip technology, modulation and noise suppression technologies have been improving dramatically over the past few years such that a low cost, yet very robust RF solution for microNet are provided.

During the last five years the International standard for safety IEC 61508 has become more and more known in Europe as a safety standard and it can be expected that it will become mandatory for all networked systems that operate in environments where people may be endangered through dangerous or catastrophic events like fire, total power failure, explosions, toxic gases or environmental catastrophes, just to name a few from a long list. A number of communication protocols have already been enhanced to accommodate these safety requirements, such as CAN, Profibus, Asi, IDA (Ethernet) and lately LON.

The principle of Safety technology in order to reach the Safety Integrity Level (SIL) 3 or even 4 is to have all information processed by two independent and preferably diverse "information channels". Since the microNet architecture is built around a very powerful channel concept, it will be straightforward to apply this concept towards logically "safe channels" which are internally handled as two independent - identical or diverse - microNet channels. In addition, two independent microNet applications associated with these channels can be treated as one logical "safe application" with a third application generating the so-called "safe state". Further, employing a "safe" development environment, e.g. "safe" CoDeSys, which generates safe application code, will complete the modular approach to microSafety.

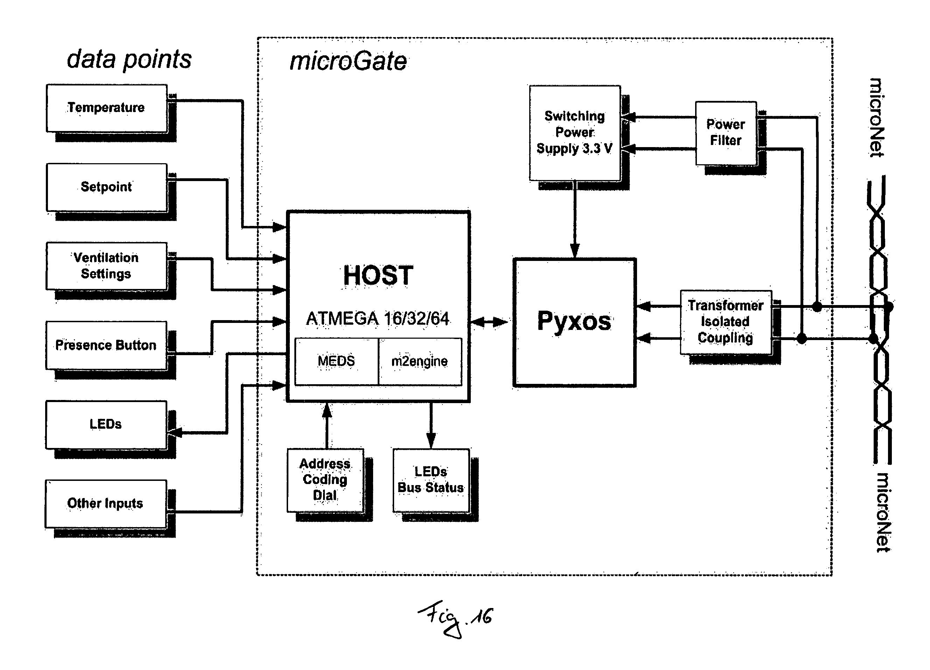

The number of applications and the areas of microNet applications are numerous. Because of its scalability and its Pervasive Interoperability several areas in building automation seem a good choice for pilot installations. For example, a room control unit which interfaces to several analog and digital data points. (see Fig. 16)

Depending on the complexity of the room control application the right sized microprocessor of the ATMEGA family and identical development tools can be chosen while retaining most of the application software. In another project a room controller will be equipped with a microGateway to support wireless F-devices which communicate via the enOcean RF protocol.

In yet another example, a conventionally used wiring scheme of a distribution cabinet is equipped with microNet power modules. Today, power modules typically have no intelligence of their own and must be wired to one or several central groups of I/O-modules which requires lots of wire, time and cost. In the future all power modules in this example will be intelligent microGates and simply be connected by a microNet bus. which leads to a significant reduction of technician hours and testing effort required to find and correct wiring errors. As a further benefit the microNet connected power modules can individually log and report error conditions and such increase operational availability of the distribution cabinet.

The microNet communication protocol can operate on any microServer Pyxos pilot (in preferred embodiments up to 4 in one microServer) and provides means of effective communication for telemetry dataflow between microServer and microGates, along with diagnosis and management operations on the microGates performed by the microServer.

The application that provides the microNet protocol stack on a microServer side is called MicroNet Interface to Network Driver (MIND). Depending on the configuration settings it can open communications with a Pyxos Pilot (as SPI slave device), which are placed on the main PCB of the microServer. SPI access to a Pyxos Pilot is opened in exclusive mode, but a Pyxos Pilot not used by microNet can be dedicated to any other (proprietary) communication applications.

Two Pyxos channels can be "coupled" by microServer software for purpose of redundancy, providing one logical channel from two physical channels (see redundancy features of the microNet protocol).

The microNet communication protocol takes advantage of the level of automation, provided by the Pyxos technology. Thus, lower layers of the protocol up to layer 4, which are most consuming in terms of CPU capacity, are implemented in Pyxos hardware, leaving "more intelligent" layers from 5 to 7 to MIND.

The part of the application which resides in the microGate and serves as an abstraction layer of the Pyxos protocol to the user application is called microEngine. A microEngine has features including:
- It provides a unified and open programmatic model, which helps to create microGate user applications
- It has a small footprint on RAM memory and non-volatile memory of the microGate CPU
- In a so-called light version, a microEngine supports a mandatory subset of protocol functionality, but is able to be executed on low-end devices with limited 8-bit CPU capacity
- in a so-called full version a microEngine can fully support microNet protocol functionality, including gate and server authentication and encryption of data. It also supports the polling and event polling mode of "far" or "foreign" F-devices behind a microGateway or a microRouter.
- microEngines may be supplied to microGate manufacturers for the most popular microprocessors under license but free of charge in the form of statically linked code.

This is a concise description of the Pyxos technology used by the present invention.

The Pyxos protocol is a deterministic Time-Division-Multiplexing-Access (TDMA) protocol which uses a fixed transmission rate of 312.5 Kbits/s. The protocol is strictly master-slave, one master device (called Pyxos Pilot) and up to 32 slave devices (called Pyxos Points) can reside on one physical channel. Both pilot and point devices use the same kind of silicon chip (Pyxos chip), which has a unique ID, assigned during the chip manufacturing process designated Pyxos unique ID (UID).

The Pyxos pilot takes care of generating timeframes, which are divided into up to 32 Write and 32 Read timeslots, each of which holds 2 times 32-bit Pyxos Chip Values (PCVs) and 2 times 8-bit Pyxos Chip Indices (PCIs), together with communication acknowledgements and CRCs for error detection and correction. Thus, in each communication frame each Pyxos Point device can send and receive two 32-bit values and their addresses in Pyxos chip memory. In the case of 32 points the "length" of one frame is 25 milliseconds, which results in 1.6 Kbytes/s of duplex communication. In networks with smaller amount of devices the number of timeframes can be reduced, resulting in higher communication rates. In a minimal network with only 2 points one timeframe has a duration of 1.8 milliseconds and provides a communication speed of 4.4 Kbytes/s.

Each Pyxos Point has a timeslot number assigned to it, and can receive information in its Write timeslot and send information to the Pilot in its Read timeslot. For completing a transaction an acknowledgement of the receiving application is transmitted in the same frame, providing deterministic behavior. Several methods of assigning timeslot numbers to newly installed Pyxos Points are supported, including:
- Hardwired assignment by a Pyxos Point.
- Automatic assignment by a Pyxos Pilot depending on Point Program IDs (PIDs), or UIDs.
- Assignment by manually pressing the service pin on a Point device in the case of ambiguity in automatic device identification.
- Reading/Writing of information over the network from/to Pyxos points looks to the user software like accessing a serial memory chip over SPI.
- Multiple physical media can be used to transmit data. Polarity insensitive twisted-pair wiring with free-topology and bus-topology, which can also be used for powering the networked devices, is also used by the present invention.

The microNet protocol builds on the Pyxos protocol and always uses automatic assignment of timeslots to Pyxos points. Addressing of microNet devices is abstracted out of timeslot assignment, and thus, between microServer resets microGates cannot be assigned the same timeslots. Lower-level identification of installed devices is done using their Pyxos IDs.

There can be different logical states and modes of micro Gate devices during operation. Right after powering up a microGate device goes to initial state when it has no assigned timeslot, and is listening to network communications searching for a free timeslot. After assigning a timeslot to a device the microServer recognizes it by its Pyxos ID as previously discovered or as a new one and sets it into operational mode or service mode, respectively. Operational mode is the normal mode, when a device application is running and communications with channel data is active. In service mode a device application is stopped, and the device is waiting for commands from the microServer. The service mode is dedicated to file transfer, testing, device management, etc.

As already noted, device self-description is a concept of the present invention. This feature, combined with self-description techniques and the microNet communication protocol may yield advantages including:
- provide a flexible standard framework for creating runtime software for microGate devices
- provide interoperability and compatibility of devices from different manufacturers in the broadest sense
- advanced device identification/commissioning technology
- reducing device installation costs

Each microGate device holds at least one logical entry called microNode which always holds a self-description file, called the MicroNet Electronic Data Sheet (MEDS). In MEDS the concept of a data channel is used to describe a single point of telemetry information, passed over the network, i.e. measurement of a particular temperature, or control of a particular drive. Channels have properties and parameters, by properties they inform the microServer which type of channel they are, including physical unit, way of digital representation of telemetry data and other properties. With parameters the microServer can influence individual channels or a whole microGate device and perform tuning, adjustments, calibrations, etc. The microGate device itself can also publish properties like manufacturer name and contact details, manufacturer-specific information like custom messages descriptions, etc. The MEDS is uploaded from the microGate to the microServer by the microNet File Transfer Protocol (MFTP) right after discovery of the microGate (and assigning a timeslot), which happens automatically at the moment of connecting and powering up the device.

A principle behind the microNet protocol is that for achieving the highest possible communication efficiency neither configuration nor data description information traffic is necessary after uploading the MEDS and taking the necessary configuration steps. All information traffic that takes place on the network is exchange of raw telemetry data.

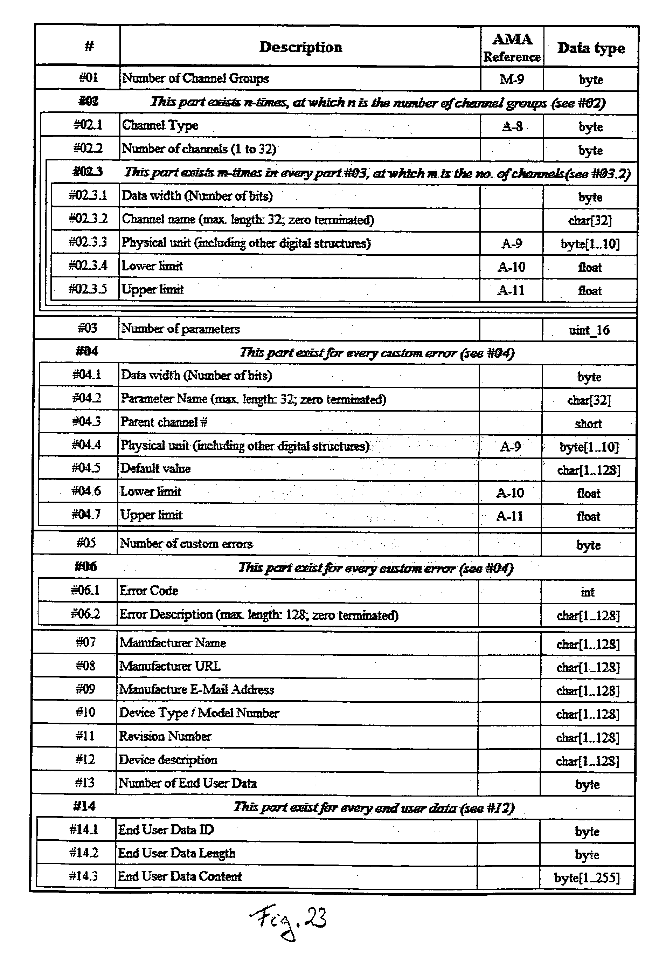

An implementation of the MEDS is shown in Fig. 23.

The connection of legacy devices to the microNet and to the microServer is supported by special purpose microGates which have industry standard analog inputs and outputs, e.g. 0 ... 10 V, 4 ... 20 mA, resistance measurement input, etc. Such generic or general purpose microGates - also designated as microAdapter, microBox or microIO - contain only a partial MEDS, because it is inherently unknown to such a microGate device which particular physical unit it will represent and which range of that unit will be measured or controlled.

The MicroGate input or output can support several industry signal standards, which can be configured by software (i.e. by microNet parameters) for use with a particular signal type, whereby the default multi-mode input or output is set to high-impedance.

In order to add the missing identity information in the microGate for a complete MEDS the connected legacy analog sensor or actuator is equipped with an RF tag. RF tags are low-cost sticky memory chips equipped with a passive RF interface which is typically energized by inductive stimulation when an active RF reading device is approached. Attached to a legacy analog sensor (actuator) the RF tag contains information representing the properties of the sensor (actuator), including its physical unit, the range of valid measured values, and (if applicable) parameters describing the non-linear characteristic of the device. It may also contain additional "personalized" information like a device type ID, manufacturer ID, date of production, etc. When scanned with a special reading device - typically attached to a laptop or handheld microNet installation tool - the RF tag information is transmitted to the installation application (assistant) residing in the microServer, which completes the respective MEDS. Generally, the microGate may have several identical ports to which the sensor or actuator can be connected. In this case the assignment of the correct port may either be done manually (by service pin and/or installation tool) or even automatically, provided the microGate hardware is equipped with a "port recognition" circuitry when a device is connected.

An automatic "merger" of the MEDS takes place in the microServer using output parameters of a legacy sensor MEDS and input parameters of a microGate MEDS, conversely for legacy actuators. If the microGate supports several industry signal standards on its ports then the necessary parameterization of the microGate has to be performed in a subsequent step. Also, a merged or combined MEDS can be transmitted back to the MicroGate, if it supports the "write MEDS" function, for persistent use with a particular set of sensors independent of the MicroServer.

A microNet may have a limited number of 32 devices per microNet communication channel. But there is a possibility to extend its capacity by providing gateways to other communication channels in the form of a generic microGate device. Such a microGate is called microGateway or a microRouter, and carries out, inter alia, following tasks:
- Managing of second tier devices - installation, configuration, implementing particular communication protocols
- Abstraction of second tier devices in form of microNodes, making them available to microServer applications, which are unaware of second tier devices
- Description of second tier devices by a MEDS, related to respective microNodes

From the point of view of the microServer the microGates and microGateways are "near" (N-devices), and devices residing in the second tier are "far" (F-devices).

A MIND application is aware that some microGates can represent more than one physical device. The microNet protocol supports addressing of a plurality of logical devices in each microGate with the help of a microNode index which is encapsulated in any microNet command or message. The index 0 always addresses the microNode which represents that particular N-device. When a microGateway discovers an F-device it will register the type of F-device and represent it in its database as a microNode, with index greater than 0. Then the microGateway signals to the microServer that a new microNode has been registered in its database, and the microServer initiates an upload of the corresponding MEDS(s). The whole system is very flexible and transparent and does not require any special implementation of communication between N-devices and F-devices.

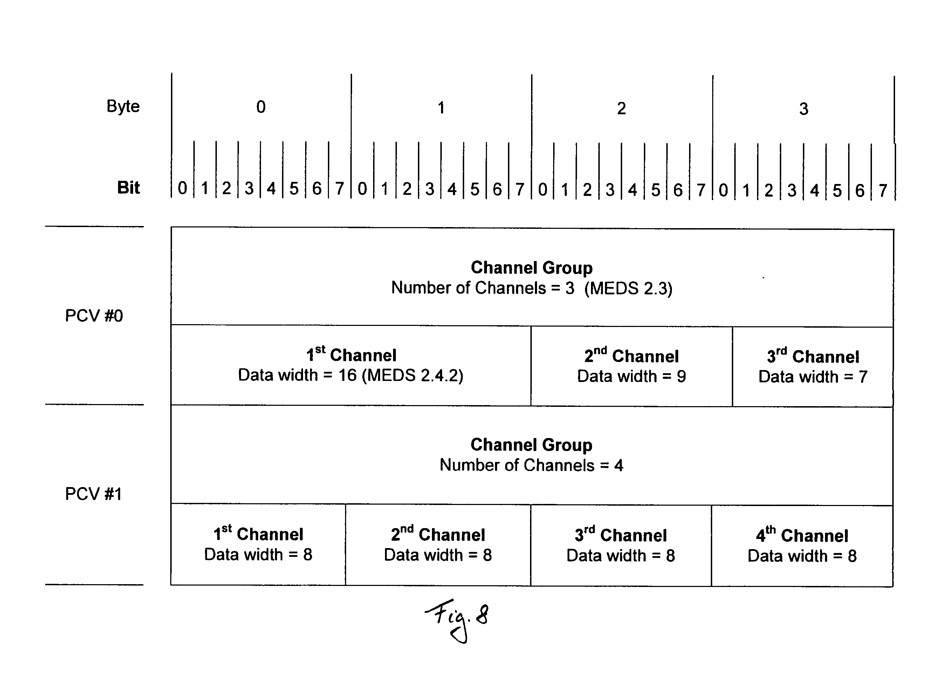

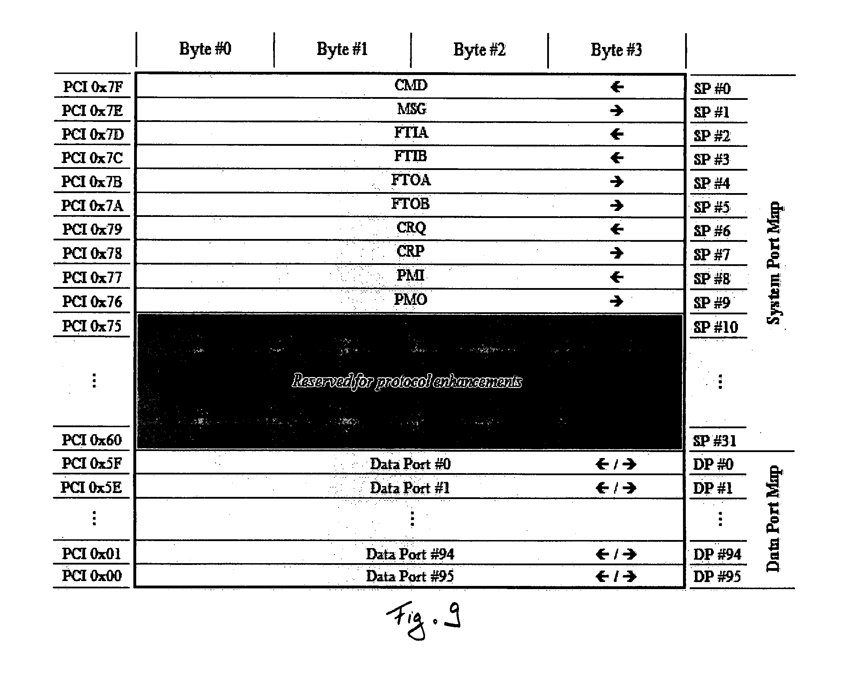

Low resolution non-synchronous input or output channels can be packed in a side-by-side manner to one PCV, for compactness. These channel data may be sent together in one PCV over network as a channel group. Synchronous data channels are normally not packed together, because each sending of a sync data channel value is a separate event. (see Fig. 8) Communication over network may be optimized by statically reserving PCVs for channel groups, instead of multiplexing channel groups in one PCV. Thus additional information that must be transmitted may be reduced to a single 8-bit PCI per channel group.
The microNet protocol standardizes the Pyxos point memory map by describing the meanings and functions of memory locations. Thus, 96 PCVs with indices from 0 to 0x60 are reserved for representing data channel groups, and PCVs with PCI from 0x76 to 0x7F are used as service PCVs for the implementation of different protocol functionalities. PCVs that have PCIs starting from 0x80 are reserved for low-level protocol implementation. (see Fig. 9)

If a microGate contains one microNode then the assignment of PCVs to channel groups is straightforward - starting with PCV0 and incrementing PCV number at the next channel group.

A different approach is taken in case of a microGateway where it is not desirable that with adding or removing an F-device all channel groups in Pyxos point memory space are shifted. To avoid such shifting and related rearrangements in case of multiple microNodes the relation between the channel groups of each microNode and the PCVs may be described by PCV mapping tables (PMT) which can be uploaded from the microGateway, one by one, and by one microNode after another.

In case of some PMT changes (e.g. when discovering a new F-device) there is also a special message sent from the microGateway to the microServer.

Commands are sent by the microServer to the microGates to perform certain operations, like changing states, initializing file transfer, etc. Some commands (file transfer, wink, parameter read and write) may be performed by a device in service mode in order to not affect the flow of telemetry data. All commands fall into two groups - mandatory and optional. The first group must be supported by all devices which conform to the microNet standard.

Every command may have a 4-byte structure. In preferred embodiments, the first two bytes may define a command function, the third byte may be a command argument and the fourth may be a microNode address.

As can be seen, commands may support a number of activities, including setting and fetching the device state, resetting a device, winking, testing, file transfer, authentication, and performing parameter operations. The command set is extensible by a, for example, device manufacturer, in the form of adding custom files transfer and custom commands.

Messages are used by a microGate device to signal some change in state, or as an informational response to some request from the microServer. As an example, there are, for example, following message groups:
- Change state message group: it reflects the change between microNode service and operational modes
- Service pin message group: it allows and reflects activating the service pin on a microNode
- Error message group: it reflects an error condition related to microNode malfunction, test error, receipt of an unsupported command
- Configuration change message group: it reflects a spontaneous change in a microNode configuration
- Custom message group: it reflects any custom messages that can be logged on the side of the microServer

Special features of the microNet protocol include:
- Redundancy
- Authentication of a device
- Authentication of a microServer application
- Data encryption
- Secret key sharing
- Safety

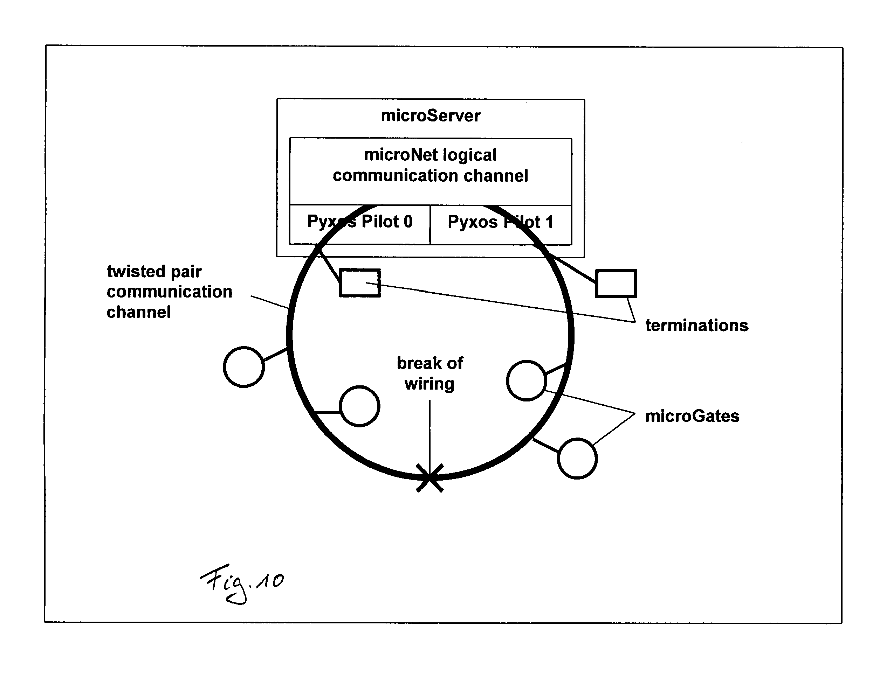

Two microNet physical communication channels can be physically and logically coupled to provide one redundant logical communications channel. If the redundancy feature is not supported by a microGate device it has only one physical communication interface (one Pyxos Point) and in this case loop redundant network topology can be used. (see Fig. 10)

Loop topology only partly solves the problem of redundant communication channels. In case of intact wires one of used Pyxos Pilots (e.g. Pilot 0) is active, generating timeframes and communicating. The other one (e.g. Pilot 1) is initially configured as Pyxos Point, and assigned a timeslot over wire from active Pilot (Pilot 0). In case of a wire break the inactive Pilot (Pilot 1) detects a communication failure and goes into active state, rediscovering all reachable microGates and resuming communications with them.

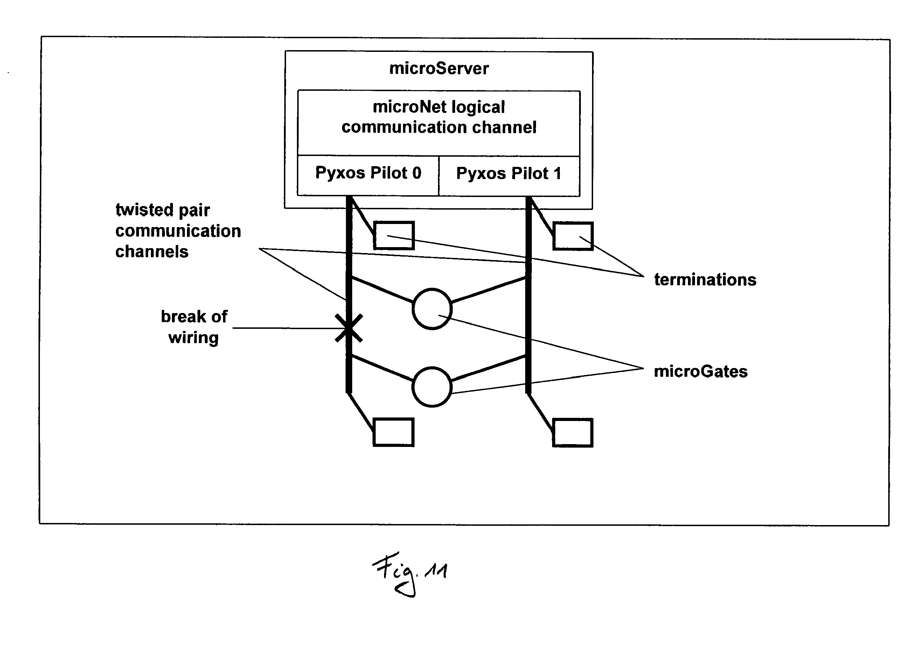

To provide a more reliable redundancy solution for microNet the rail redundant network topology is proposed. (see Fig. 11)

The rail topology uses microGates with redundant communication interfaces, which is a better solution of the redundancy problem. Initially both microServer Pyxos Pilots start communicating, and each microGate can decide autonomously which communication scenario to prefer - using one communication channel (single connect) or both (dual connect). Dual connection will improve communication speed by a factor of 2.

To declare the existence of a dual connection the microGate first registers with its one (primary) Pyxos Point, then is assigned a timeslot, gets the MEDS uploaded via this Pyxos Point and by MEDS property declares having one additional Pyxos channel (secondary) with associated UID. This technique allows a microGate with dual interfaces to be also used in non-redundant solutions to take advantage of increased communication speed. Still, both interfaces will have same Pyxos memory map, described in the MEDS. In case of a wire break a single connected redundant-interface microGate becomes separated on one interface and automatically switches to its other interface to resume communication at the same speed. In this case a dual connected microGate just degrades in communication performance.

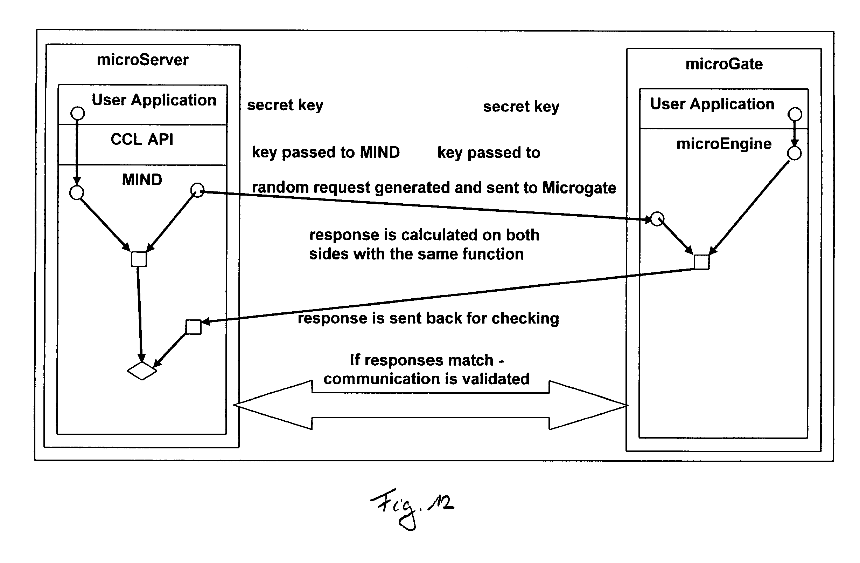

There are control tasks where a microServer control application may require communication with an authenticated microGate. In this case before starting communication both microGate and microServer applications owns a secret key and a special request-response mechanism is used by the microServer to make sure that the microGate owns a secret key, without actually passing the secret key over an insecure network. (see Fig. 12)

This mechanism is implemented inside the MIND application and the microEngine (e.g. full version) applications and is accessible by a user applications using CCL API or microEngine API, respectively. At the start of the authentication process the secret key is stored by user applications on both sides. Then it is passed to both MIND and to the microEngine and subsequently both take care of the authentication automatically.

Authentication of a microGate may support two modes - weak mode and strong mode.

In weak mode authentication is performed when the device is installed and discovered. Afterwards the device is recognized as authenticated by its Pyxos UID. Weak mode gives weak protection, so it may be not optimal in security systems, but it has the advantage of non-degrading communication performance.

In strong mode authentication is executed every time when the microServer application wants to check the microGate "validity" and/ or its "integrity", for example, each time when new data arrive from that particular microGate. This mode is secure, but the penalty is a degradation of communication performance.

The necessity of authentication of a microServer application arises when a device operated by that microServer carries out some functions which should be protected from fraudulent access. A typical example is a door lock device. The authentication of the microServer application is implemented in the MIND application and uses the same principle as the authentication of a microGate (see description above) but in opposite direction. Thus, any data or commands received from a microServer may be validated each time they are received.

To protect sensitive information that can travel along microNet communication channels encryption with secret keys can be used. Encryption services are fully handled by the MIND application on the side of the microServer and by the microEngine on the microGate side. When encryption is enabled, each PCV value passed across the network contains encrypted information. PCIs (indexes) are not encrypted.

As PCV and encryption key are just 32 bits long - tossing of secret keys with adjustable frequency is implemented in the microServer MIND application in order to provide encryption security. After generating a new secret key it is encrypted with the old one and passed across the network to (a) particular microGate(s). To support encryption keys tossing the microServer must be authenticated by the microGates, because encryption service itself does not mean secure access.

Thus, an encryption service of the microNet communication protocol is of a lower protocol layer than an authentication service and all traffic, including authentication requests and responses is also encrypted for better protection.

When a microGate has received an encryption key renewal from the microServer it starts the authentication procedure using the old encryption key. The microServer responds, also using the old encryption key. If the microServer has been authenticated - the microGate accepts a new key and sends a KEY_ACCEPTED message to the microServer, encrypted with a new key. Sending of the KEY_ACCEPTED message is delayed by the microGate by 1-2 seconds to provide protection against combinatory key cracking, while during this delay both devices still use the old key. Only after the microServer receives and acknowledges the KEY_ACCEPTED message both devices start using a new key.

In case the microServer was not authenticated the microGate stays on the old key but does not signal this.

In some cases a microGate can support encryption, but may not support key tossing, e.g. because of having non-volatile storage with limited amount of writes. These microGate capabilities are described in the MEDS, and so the microGate can respond to microServer with a NOT_SUPPORTED error message.

To use authentication and encryption services microGate and microServer applications store secret keys. The microServer application can receive its keys in several ways including: Keys can be hard coded into the microServer user application;

Keys can be securely assigned to an application by a LINUX user with sufficient access privileges.

The microGate application can also receive its keys in several ways including:
(1) Keys can be hard coded into a microGate application during manufacturing;
(2) Keys can be assigned to a microGate by the microServer over the microNet network.
(3) In case (2) the microGate comes from the factory unprotected, so it will accept keys from any microServer without authentication. That is why before doing this assignment of keys maintenance personal must make sure that the network is secure and not accessed by someone else.

In order to enable the microNet protocol and the microNet architecture to comply with Safety Integrity Levels up to SIL3 (according to the IEC 61508 standard) the microNet protocol may be modified/enhanced to handle two independent channels of data, address and service information, either in parallel or, preferably in a serial way. A serial solution means that two identical or encrypted packages will be transmitted and received sequentially, independently evaluated and the results compared bit by bit. The advantage of this solution is that it is easier to implement, the disadvantage is that the total operational bandwidth - and hence the response time for safety critical events - is reduced by more than 50%. It will have to be decided in due time by a worst case analysis whether the serial solution will cover more than 95% of all cases.

### The microServer hardware architecture is rather complex. (see Fig. 13)

The microServer core is an ARM9 32-bit processor, with a number of peripherals to support a variety of hardware communication channels, including:
- four Echelon Pyxos communication channels
- USB device for direct console connection to a PC
- USB master to be able to read/write from flash disk sticks
- 10/100 Mb Ethernet LAN interface for fast connection to the upper levels in a distributed automation system
- RS232 serial port for connection to analog modem or GSM modem
- I²C bus to have the ability to connect to locally mounted devices, like an LCD or TFT display

Another valuable facility of the microServer hardware platform is the expansion slot, which is used for mounting an expansion communication module called microComm module, which can support other popular automation networking standards like KNX, LON, M-Bus, DALI, CAN, etc.

Additional flash memory disk of MMC form factor can be supplied and installed internally in the microServer to serve as a backup/logging/autoconfig storage.

The microServer can be considered a general purpose PLC, which is available to be used with customer application software. Therefore the problem arises to provide a unified high-level interprocess communication (IPC) technology which will allow applications from different manufacturers to seamlessly "mix and match" in solving one or several control tasks. This unified IPC may have features including:
- fast interprocess communications for exchanging monitoring and control data
- generalized data hierarchy - to be able to describe any particular control network or structure
- Configurational flexibility, allowing IPC to be configured on behalf of control processes or specially dedicated (assistant) applications
- a simple programmatic model to be adopted easily by control application designers and developers
- support of communication via LAN/Internet

Compliancy of the software architecture with these requirements is believed to create a new open market of software applications, which can enhance the popularity of microNet technology.

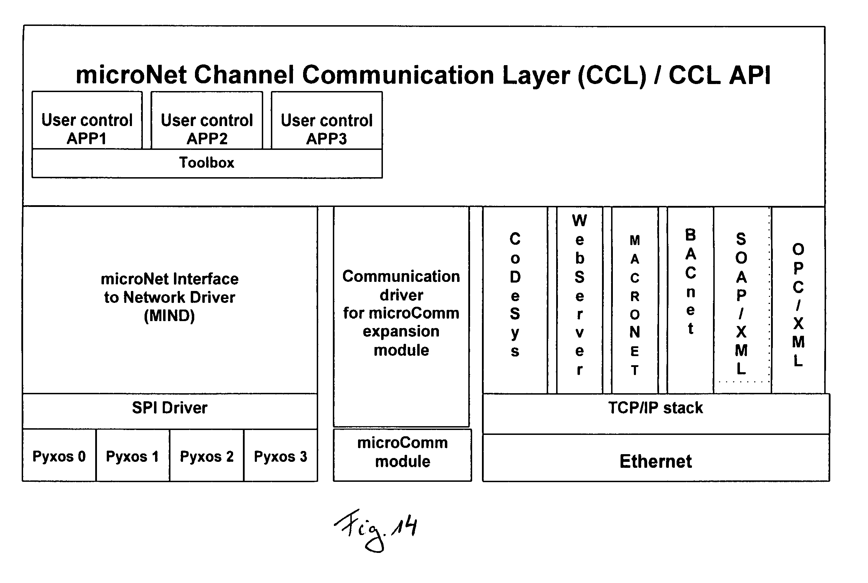

In general, the microServer software structure comprises several components: the physical communication channels of the microServer, four Pyxos Pilots, the microComm extension module (used to provide additional communication facilities for the microServer) and the Ethernet interface. (see Fig. 14)

Communication interfaces are controlled by associated drivers, which also expose high-level models of their respective networks to user applications by means of the Channel Configuration Layer API (CCL API). The CCL layer provides unified methods of communication between applications; viewed from the CCL API all applications (including communication interfaces) are treated equally as participants of the overall dataflow.

To be compatible in terms of connectivity and dataflow applications may use the CCL API, but to provide additional functionality which is not supported by the CCL API they can easily extend classes of the microNet CCL API with their own protocol-specific APIs (PS APIs). In this way, other applications which are unaware of PS APIs may still use the standard CCL API, and those who are aware of the presence of PS API may use these additional functions. Interprocess communication is organized in the form of virtual data channels, which are implemented on the basis of memory segments, shared between processes.

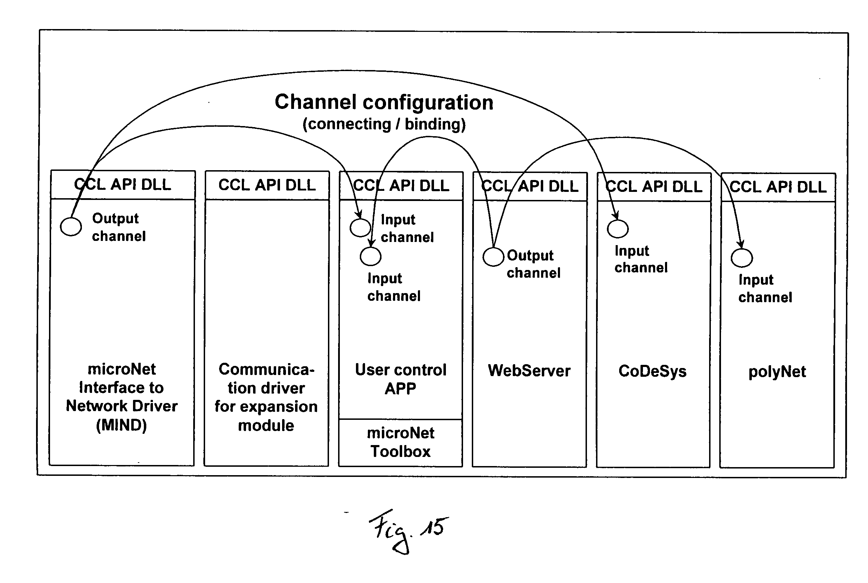

Several generic communication and control applications residing in the microServer are (see Figs. 14 and 15):
- CoDeSys: an IEC 61131-2 programming environment which compiles intoapplications, which run on the microServer
- Web server: provides HTTP and PHP capabilities of the microServer
- MacroNet: a local agent which provides internetworking communications among microNet applications
- BACnet: an application that provides microNet compatibility with the BACnet protocol
- SOAP/XML: an application that provides microNet compatibility with the SOAP protocol
- OPC/ XML: an application that provides microNet compatibility with the OPC protocol of the OPC Foundation

The Operating System of the microServer is embedded LINUX. LINUX was chosen because of several advantages over other operating systems, like availability of source code, availability of multiple ready-to use technologies (TCP/IP, Web, etc), as well as powerful development and documentation tools. Other commercial or non-commercial embedded operating systems, e.g. with a Real Time kernel, could be used as well provided they provide similar functionality like LINUX.

LINUX has its programs executed in separate virtual spaces, which protect them from each other. Processes that run under LINUX have privileges, which define the CPU availability for that process.

LINUX has several useful models of inter-process communication (IPC), including shared memory (e.g. AT&T UNIX Sys VIPC), which is the most performing form of IPC. That is why it was chosen for channel communication between microNet applications.

LINUX inherits from UNIX a powerful system of user rights, which are used in the microNet software model. Every system object, including files and even shared memory segments can be accessed only after validating the user privileges of an accessing process.

LINUX has a TCP/IP stack built into kernel.

A feature of the present invention is openness. This means that all hardware and software interfaces to build microGates and microGate applications are documented in such a way that any company or any individual developer can build field devices and "mix and match" them with field devices of other manufacturers. The same holds for all software interface definitions, which relate to the microNet user application, i.e. function calls and function libraries in object code. However, such openness can only be achieved when a technical architecture is provided which fully supports interoperability in all encompassing, ubiquitous way which goes beyond the scopes of such concepts known from industry. It is therefore called "Pervasive Interoperability".

As there is no possibility to provide all and every kind of measurement and control device that is needed for numerous and diverse control solutions the present invention provides standards to ensure that microGates from many and independent manufacturers will be interoperable and compatible with the microServer.

Requirements to provide hardware interoperability comprise:
- The Communication hardware is standard, twisted pair Pyxos physical channel with bus and/or free topologies.
- The microNet communication protocol is developed as an expandable protocol with mandatory and non-mandatory subsets of functions; any enhancements of the microNet protocol fall into the non-mandatory subset. The mandatory subset of functions is non-expandable and has to be implemented on every microGate device.
- The MIND communication application implements the standard microNet communication protocol on the microServer end. All future versions of the MIND application are downwards compatible, which means that the later version can define only a superset of functions of previous versions.
- The microEngine application implements the standard microNet communication protocol on the microGate end. Any microEngine must implement the non-expandable mandatory subset of functions. The microGate registration procedure is fixed as an automatic timeslot assignment.
- The microNode self-description information format (MEDS) is fixed, but has provisions for adding manufacturer-specific properties and device information.

There is also a number of organizational means and methods to facilitate microGate development, which, strictly speaking, are not part of the microNet standard, but serve the objective of Pervasive Interoperability:
- Software tools for the creation of applications, MEDS and the testing of microGates are freely distributed to microGate manufacturers under microNet license.
- microEngine statically linkable libraries for popular microprocessors are distributed free of charge to microGate manufacturers under license.
- microGate reference designs and evaluation/prototyping boards are available to microGate manufacturers.

microNet Pervasive Interoperability includes not only hardware interoperability, but also interoperability of control, monitoring, server and other applications, executed by the microServer. This allows using a highly effective component model where software application components are designed to best solve some narrowly defined task, but combining several such components will lead to complex yet highly reliable functionality. Examples of tasks to be solved by such software components are data logging, data archiving, event scheduling, alarm handling, alarm notifying, data (re)formatting, handling of special communication channels, e.g. with modem, etc. This approach includes the following advantages:

As there is no need for applications to include all imaginable functionality they can be more compact. Reusing the code of components saves capacity (RAM, FLASH) of the microServer.

Concentrating on one particular task when creating an application will improve the quality of such application. There is no need for a manufacturer to divert his attention to the implementation of auxiliary functions, which can better be solved by standard component applications. This shortens the development cycle and lowers development costs.

Distributing the development of components among many independent developers will create an open market of software applications, which, driven by competition, will improve the quality of applications and provide several solutions for a user's choice.

To match these objectives microNet provides a universal shared library for interprocess communication and data management which is called microNet Channel Configuration Layer (CCL) and is engineered to, inter alia:
(1) provide fast means for interprocess communication for applications to exchange real-time monitoring and control data
(2) provide a general architecture for the representation of hierarchical structures of control networks, hardware and software (e.g. multi-tier communication channels, PLCs, field devices, data points)
(3) provide a non-volatile storage, writing and retrieval mechanism for (2) provide - on the basis of (2) - means of navigation, search and filter facilities for applications to find connectable data channels in other applications, locally or over LAN/Internet network

The microNet CCL library has an open programming interface (CCL API) and can be dynamically linked to a user application. The CCL API has capabilities to manipulate control network representations, which can be flexibly used in various ways by applications of different nature.

In the microNet CCL library the notion of a data channel is employed for providing mechanisms of fast interprocess communications especially adapted to the field of monitoring and control. Channels are serving as an information-exchange "glue" for a plurality of components of the microServer system to work together.

Channels may be implemented on the basis of shared-memory segments. Channels have directions. An application that writes to a channel is called channel host and has read and write access to the corresponding shared memory, and also to the internal database representation of this channel as output channel object. An application which reads the channel is a channel subscriber; it has read-only access to the shared memory, and to the internal input channel object representing the channel in the internal database.

In order to tell the system that one or several input channels must receive a value from a particular output channel a channel configuration procedure is carried out (in detail described below). When matching input and output channels are found, links between them are generated and stored in the database. Afterwards, when the application starts it restores the links to the output channels of other applications and starts communicating. The process of initiating communications using previously stored links is called subscription.

Data values that travel along the data channel are associated with their timestamps (each timestamp is Posix time extended by milliseconds). A timestamp is assigned by a host application when the data value is obtained or created.

Depending on how often a host application transmits the data it can declare an output channel to be:
- asynchronous (with time lag); or
- synchronous.

Using an asynchronous type of data delivery a host application can provide data at any time, but the data must not be older than computed from the specified time lag. In this way it is possible for the application not to send the data right after it was obtained - but wait a short period in order to optimize communications. In this mode if two closely subsequent data values are obtained by the host application - it is allowed to combine the values by using the latest value together with a timestamp from an older one.

If no new data is obtained for a long period of time (e.g. the value has not changed) - the host application sends renewals of old data values with updated timestamps to show that it is alive. It is the host application's responsibility to provide time lags - which have to be declared - or to report or log an error in case of such time lag being unachievable for some reason.

With time lag set to 0 the channel becomes fully asynchronous, and the host application may provide new values as frequently as it decides. No time lag limitations can be demanded in this case by client applications.

The synchronous type of data delivery is when each arrival of new data is a separate event that must reach the client applications. In this case the data is time-stamped and sent immediately. A good example for this is pressing a button, whereby each press is a separate event, which contains the information implicitly within the timestamp, and where the data value is not even relevant (and can be discarded). Synchronous channels that make only use of the timestamp, but no use of the data value are called event channels. Event channels are widely used in the system, for example each microNode includes event channels, which represent, at high-level, event messages of the microNet communication protocol:
- communicating/unreachable
- state changed to operating or to service mode
- service pin received
- error condition received
- custom message received

Often calculations are performed with timestamps, e.g. for the integration of channel value over time. These calculations can be done easily with timestamps of channels that belong to applications that are executing on the same microServer, because they all have the same system time. But using timestamps from channels that are hosted on different microServers which communicate via LAN or Internet is quite tricky because:
- different machines have different system times
- network communication adds random delays when transmitting a data packet

The problem is that it is not possible to precisely synchronize the clocks of several microServers using the network, because the network is not deterministic.

A special kind of microNet application - the microNets application is used to deal with such problems. It serves, inter alia, as:
- an agent that provides access for local applications to other microServer's databases across the network
- an agent that performs channel data aggregation and tunneling of these data over TCP/IP and UDP/IP
- an agent that, upon receiving any data channel information from other microServers, converts the timestamps to local time using probabilistic estimation of time lags

To expose available output channels to other applications each application in microNet system may include at least one associated database. There can be a several databases for an application (on disk), because there can be several instances of the same application simultaneously solving similar control tasks with a different sets of channels.

Each database may be stored as a file on the microServer non-volatile storage device (e.g. flash disk), and/or may be indirectly (via CCL API) accessible by other applications. To be saved to a database channel objects of an application may participate in tree-like hierarchy of objects, created by the application to describe its structure. At the root of this tree there is an appInterface object, which encapsulates all other objects, including channels.

As a basic structure building block the node object is used, which can encapsulate other node objects, to reflect multi-level hierarchies. A node is an object that represents any entity that contains a set of other entities, for example a subnet that contains devices, or a device that contains data channels.

A node object can also encapsulate channels, properties, parameters and rules. Parameters are similar to channels, with the difference that they can be read and written to but cannot be connected for communication like channels.

Properties are used to express anything special about an object, e.g. a logical name, a physical unit, data format, etc. This information can be later used in search and filtering mechanisms. Properties always have names, that identify them, and values.

Rules are mathematical expressions that use the values of object properties as members. Rules always return a Boolean result (true if rule holds or false if it is violated). The results are used to select objects (channels) with matching properties for connection. The process of progressively testing a set of rules on any set of objects is called matching. If there are some objects that have property values which are conflicting with the rules they will be excluded from the resulting set. Matching is a general procedure used for finding connectable channels. For example, an application input channel can require from a matching output channel to support a particular physical measurement unit type (e.g. degrees Kelvin).

As an example of building a hierarchy the microServer MIND application can be considered. Under the appInterface object a group of nodes is created which represent the microNet communication channel objects. Under each of them it will create a group of nodes representing microGates, assigning them logical IDs or LIDs. On the next level microNodes will be created, and under the microNodes it will create sets of data channel objects. Searching through other application's database to find connectable channels that fit some criteria or rules is a frequent task in a microNet system, so for each application the organization of its object hierarchy (database) is as important as providing the dataflow itself.

All the frequently used functions including the creation of necessary database objects, saving/retrieving the database to/from disk, and searching through the database is implemented in the CCL API. The only requirement of a user application is to customize the database using these functions.

To address any object of the hierarchy the hierarchy itself is used. On each level of the hierarchy nodes and channels have property sets and values that help to distinguish one node or channel from others. In this way addressing can be resolved from the root of the hierarchy to its branches and leaves, pointing to a particular node or channel. As an example we take the hierarchy created by the MIND application, which reflects the microNet physical layout. In the MIND database each communication channel has its number as a property which helps to distinguish between them, each microGate has its Logical Address (LA), each microNode has its number, and each channel has its unique name within the microNode scope.

Having a name of the MIND database file on a particular microServer it is straightforward to retrieve a particular channel knowing the chain: "communication channel - microGate LA - microNode number - channel name". The microNet standard defines a unified way of addressing channels in a microNet Intranetwork or microNets: the channel address is a string, containing the URL of the database file concatenated with property name/value list using the syntax of the HTTP GET method. That string is then called universal channel locator (UCL).

An example for addressing a local or remote channel [with name "Temperature"] [in microNode number 0] [in microGate with LA = 4][on microNet communication Channel number 2] [in database "MINDdb"] [on microServer "MyMnServer"]:
"/MyMnServer/MINDdb?microNet=2?LA=4?Node=0?Name=Temperature".

The following API parts and libraries may form further part(s) of the microServer software infrastructure:
- Copy-protection and licensing library
- microNet toolbox

In the event of unconstrained development of microServer applications by independent manufacturers it is preferred to protect their intellectual property. Protection is possible by "personalizing" each copy of application to a particular microServer engine, which is uniquely identified by the UIDs of its four Pyxos chips.

Personalizing means that if a copy of application finds out that there is no license for execution on this particular microServer engine (e.g. it was illegally copied) - it will stop execution. For personalizing a special library function F(UIDs, AppKey, UnlockKey) from the microNet API is used, which takes three arguments - internally obtained UIDs list, AppKey - a secret number coded into the application, and UnlockKey which is supplied to the user when the application is properly licensed. The Function F() returns true if a pair (AppKey, UnlockKey) matches the UIDs, and the application is considered licensed and is unlocked to run.

Toolbox API and library is designated to help designers and developers with the development of control applications. It contains a number of functions and objects to provide open- and closed loop control algorithms, approximations, integrations and derivatives, signal filtering and other special math used in control tasks.

There are several categories of applications that can run as microNet applications. Following is an exemplary classification of such applications depending on their functionality. Depending on functionality they will use more or fewer microNet software components and libraries.

Control applications carry out control tasks and process the input channel values and generate output channel values, exchanging these values with other applications. The set of data channels of a control application is in most cases statically determined and defined by the control task.

A communication interface application is an application that provides dataflow between control applications and some communications facility, for example, a network of physical devices. The network can be of any type like microNet, LON, M-Bus, DALI or even such complex communication as LON over IP, SOAP/XML, OPC/XIVIL, etc. For example, the communications hardware may be a microComm module mounted in the expansion slot of the microServer. The communication interface application is therefore a communications driver for control applications. The microNets application is also considered a communication interface application. Communication interface application's object hierarchies typically reflect the physical network layout and the types of devices attached. In a microNet network, though, the set of channels and devices is discovered automatically when devices upload their MEDSs to the microServer.

An Assistant type of application typically has no own dataflow. Instead it is used to operate on other application's channel sets to configure them. Mostly, an assistant application will create channel connections for the CCL API in a semi-automatic manner, i.e. human participation is unavoidable here. The Assistant application in preferred embodiments is a Web-based toolset described hereafter.
microServer models without Web access can support Remote Assistant applications, when the application runs on another host in the TCP/IP network, using FTP for microServer DB access.

A CoDeSys runtime also has functions of an Assistant application, since it can request the hierarchy of microNet network, analyze it and then self-configure its application.

An HMI application dedicated to user interaction with control applications. It provides a way of viewing control process values and changing set points. Most likely, HMI applications will not use permanent connections to control applications, but will create the needed monitoring sets of channels dynamically, and discard them after use. The information which channels to visualize can be, for instance, predefined by a PHP script.

There can be many other kinds of applications that can run on a microServer, for example:
- data and trend loggers
- schedulers
- alarm mailers, etc.

One of the biggest disadvantages of digital networks has been the high installation and commissioning effort to bring all the devices "to life" and get the entire network up and running smoothly. The main reason for this phenomenon which makes networking an "engineering art" rather than an everyday technique which can be mastered by an average electrician lies in the complexity of the products and the associated tools.

The present invention however will improve this situation considerably. The objective is that a microNet can be installed by a trained technician in less than one hour. To this end, the present invention considers the following way:
- In a first step all devices are discovered and installed automatically, when they are powered up for the first time.
- In a second step the microServer starts communicating with the devices which will expose (upload) their self-descriptive information (MEDS).
- In a third step the required data channels of the devices are connected with the data channels of the control application(s).

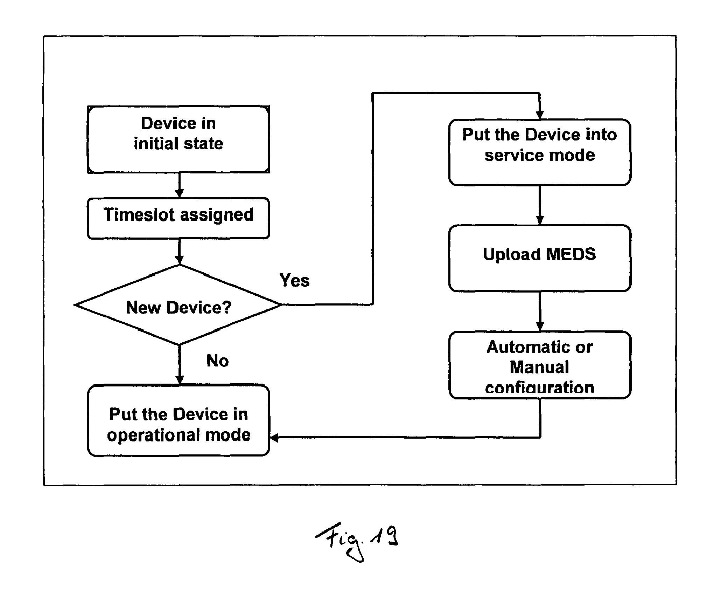

After the microServer has found a new device and has assigned it a free timeslot, it puts the device into service mode and starts uploading the MEDS. After completing the MEDS upload - depending on the applied configuration strategy - the microServer may leave the device in service mode until it can be configured, or put the device in operational mode. (see Fig. 19)

If the control application has sufficient information about which data channels it needs and from which databases it can search for these channels using CCL API functions. If it manages to find uniquely matching channels it can self-configure. In well planned and well prepared systems this process can be fully completed by the application, without user intervention. To provide more valuable information for an application to choose from - several properties can be set in the MEDS or MIND database when the microGate device is manufactured or installed:
- microGate name and location string properties - can be set in the MIND DB when first installing a microGate to describe the location where it is installed
- microGate usage tags - a set of descriptive strings which can be set in the MEDS when manufacturing the device. Values of usage tags are recommended by the MAX group to define the field of device usage e.g. "pipe-mounted", "duct-mounted", "outdoor", "wall-mounted" etc.
- microGate manual address - is a property in MEDS that gets the value from the position of a micro-dial or jumper switches when set manually on a specially prepared microGate.

In many projects, especially if general-purpose software application components are used there will be a need for tool-based user-guided channel connection. Here, inter alia, the following tasks need to be resolved:
- An intuitive visual representation of the database for an installer to let him effectively find pairs of channels to connect.
- Re-identification of devices and device groups by that installer to make sure that he is now working with a particular physical device or group of devices.

Configuration tools for a microNet system are supplied with each microServer as a microServer application called Assistant. The Assistant works as a user-interface Web-based application and has a rich set of functionalities including:
- Managing (installing, uninstalling, running, stopping, tuning) of microServer applications.
- Managing of communication channels and physical devices via their driver applications (e.g. managing microNet infrastructure via MIND).
- Visualizing application databases to the user.
- Searching and filtering databases to find matching data channels and connect them.
- Monitoring available and used microServer resources (RAM, FLASH, CPU load).
- Browsing through microServer application message logs for troubleshooting.
- Documenting the microNet.

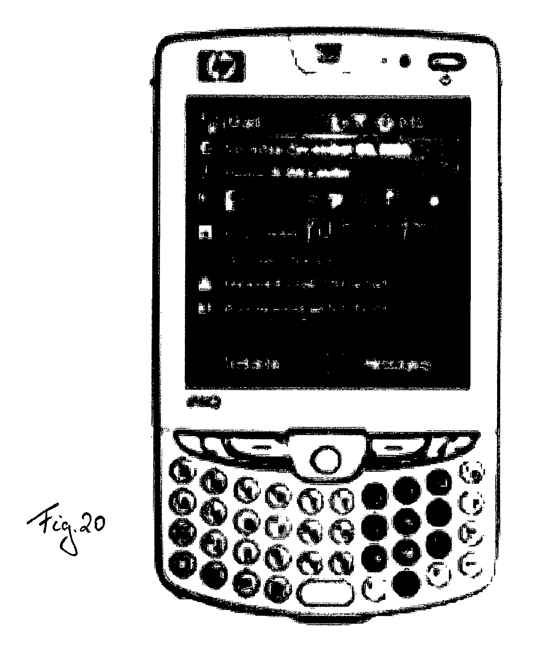

The Assistant's Web interface supports fully-functional modes including:
- lapTool - PHP dynamically generated HTMLs with JavaScript;
- palmTool - PHP dynamically generated HTMLs without JavaScript, designed to support PDAs with small screens (see Fig. 20)
- Managing microServer Applications

A typical microNet control component application may be copied to a microServer and run for the first time to customize its database. After database customization has been completed the Assistant can use information from the database to connect application channels. When doing this the Assistant adds necessary properties (e.g. UCL strings) to the application's database. Then the application is run again, reads the modified database, and merges it with the internal representation. After this step channel subscriptions take place and the application starts to carry out its control task.

The Assistant is also able to remove the application from the microServer, and clean up all the connections that were made in other databases to this application's database.

Here managing of physical devices by an Assistant application is illustrated as it is done in microNet. Managing devices using other communication technologies can be implemented in different ways. Managing microGates can be viewed as:
- Adding a microGate to the network and to the MIND network database
- Removing a microGate from the network and from the MIND network database
- Replacing a microGate
- Finding a microGate

Adding of microGates is done automatically based on received timeslots in a timeframe of the Pyxos protocol. After uploading their MEDS relevant structures are created in the MIND database to allow other applications to access the microGates.

If a microGateway is being installed then additional steps may be needed to register all F-devices that belong to it. The registration process depends on the particular protocol implemented as second tier communication protocol. After registration of F-devices the microGateway will signal a PMT change to the microServer and MIND will upload additional MEDSs of newly created microNodes.

After making changes in the database structure the user can view them in the updated database.

To remove a microGate from network it may be powered down and physically disconnected from network. After that the database representation of this device may be explicitly deleted by the Assistant tool. To this end, the user may browse through a list of all offline devices and choose to delete this particular device from the database. The Assistant application then will perform a check on other application's databases to find and disconnect any data channels which were connected to the device which was just removed.

When a microGate is replaced the following steps may be performed:
- The microGate be removed is powered down and disconnected from the network; the MIND database still keeps all the configuration and connections of this microGate.
- The microGate for replacement is powered up and connected to the network. MIND receives the MEDS of the replacement microGate and assigns a new LA to it.
- The merging operation of the removed and the replacement microGate representations may be performed on user command. During merging the replacement microGate is assigned the LA of the removed one, all database hierarchy nodes and channels receive properties, including UCL strings of the removed microGate.
- If merging is successful the replacement microGate can be put in operational mode, on unsuccessful merging the user may be prompted to complete the configuration, for example, manually on the GUI of a graphical tool.

Finding a physical microGate device in a building may be a subtask of channel connection. When the user wants to connect two channels he may ascertain that the channels belong to particular devices. That is why the Assistant application together with the MIND application and the microNet protocol support several means of manually finding an device including:
- Service pin method
- Group/ Device winking method

A Service Pin (SP) can be physically implemented:
- as a small button accessible from the outside of the device
- as a magnetically closed contact by using normal functionality of a device, when this device has some buttons/switches on it, e.g. device is a light switch or a room panel

In the latter case before the SP message can be sent the device is notified by command from the microServer that it expects to receive a SP message from the device.

When the SP is pressed the device sends the message over network to the microServer, and the MIND application creates an event on the SP event data channel of that device. If any application is connected on this channel, it can receive the event. Normally, there will be an Assistant application connected, and it will highlight the device icon on the GUI of the tool to identify the device to the user. The user may then browse through the device's channels and select the one which he wants to configure.

Some devices are equipped with service LEDs that are used for indicating the device status and for winking. The winking method of finding a device is quite opposite to the SP method. The user, by selection a device in the GUI of the Assistant application makes the LED of the device go blinking such that it can be visually detected. The microNet standard also features group winking, i.e. that a whole group of devices can be set to winking state by a single user action.

The user selects a device or group of devices from the list in his Assistant's GUI and issues the WINK command. The Assistant application, connected to wink event channels of the device(s) object(s) in the MIND database will send the event to MIND, which in turn will send a message over network to a device or several devices. The user observes the blinking of LEDs of one or several device(s) and decides if he needs to configure any channels of these device(s).

To support user-guided channel and device configuration functions which were described above different GUI forms or Views are proposed. Exemplary embodiments may be based on the fact that the operation of connection is done between one input and one output channel. This way it is possible to split the GUI window into two halves and display only connectable channels in each of these halves. Choosing a node or channel on one side of the GUI window will automatically filter out connectible channels on the other side, depending on which requirements are enabled for matching. The user can flexibly enable or disable particular requirements of a channel or node to see different sets of connectible objects. The level of visualization provided by this kind of GUI will be sufficient for most projects.

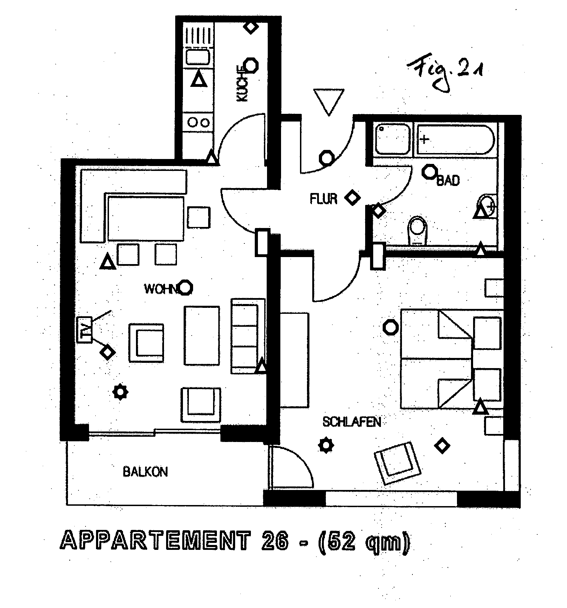

Another example of GUI or view is a 2D (or even a 3D) plan oriented tool (see Fig. 21). It is only applicable if the plan is available in electronic form and can be imported into HTML templates prepared for viewing them with a graphical tool. In spite of the complexity of preparing such plans with positioned devices using such GUI is very intuitive.

Data formatting in MicroNet technology relies on the principle that only the changing (dynamic) part of data - called RAW data - may be perpetually transferred over the network or between two communicating applications. Of course, to be meaningfully interpreted this raw data must have some very general and very basic data format, which can later automatically be translated to the data format required by a user application. According to the present invention such basic data format is ULB (for Upper and Lower limits and number of Bits) which is a parameterized data format, meaning that it can be optimized to suit the needs of optimal data representation.

For example, a microGate application developer desires to reduce the number of bits in a data representation to a minimum, limited only by sensor precision/range, as they use non-expensive 8-bit CPUs and also need to push this data through the network. The microServer application software developers do not concern data width, because they are working on 32-bit platform, but they want fast computations, which involve fixed point data formats. ULB includes 3 adjustable parameters - Upper limit (UL), Lower limit (LL), and the number of Bits (NB). With these parameters there are special cases for different data representations including:
Integer data is represented when the following holds: UL+1 = -LL, UL+1 = 2**(NB-1).
Unsigned integer data is represented when: LL=0, UL+1 = 2**NB.
Fixed point integer is represented when: LL= -(UL+1), UL+1 = 2**(NB + fpbits -1), where fpbits designate the position of the fixed point.
Fixed point unsigned integer is represented when : LL = 0, UL+1 = 2**(NB + fpbits), where fpbits designate the position of the fixed point.
ULB itself is represented and can be used in any case when UL > LL, NB > 0, though fixed point is preferable for computation.
When LL = UL = 0 then floating point usage is forced.

In IEC 1451 three data formats (integer, single and double precision real) are proposed for use in a smart transducer interface module (STIM). These data formats are not parameterized; but always the absolute value of the measured physical quantity is transmitted. According to the present invention the universal ULB data format is more flexible and the raw value passed depends on the measurement range and the resolution per bit, allowing for a reduction of the number of transmitted bits while also reducing the overall computational load.

A channel can be set to transmit measured values represented by a non-linear function, typically in order to cover expanded or compressed ranges, or for other reasons. As an example, a sound sensor typically measures the pressure p which has a linear characteristic over many decades. In order to represent the values on a linear scale (in decibel or dB) a logarithmic function is applied to each measured raw data value. Typically, this functional transformation is already performed in the sound sensor. However, it may also be performed anywhere else in the microNet system. Such channels must then be described in the MEDS by the respective function (in the example by a logarithmic function) that must be applied to the measured value (in the example with a linear characteristic). For flexible use of the measured data it is therefore advantageous for microNet sensors to supply non-linear values in addition to linearized values. The same holds, in principle, for data sent by an application to microNet actuators.

Any non-linear function and even time-dependant transformation like averaging, filtering, integration etc. can be relocated to the microGate from the microServer if the microGate is capable of running such an agent.

In most cases the manufacturer of a device decides which range and resolution per bit his device will support. But sometimes a microServer application will want to influence the resulting data format, for example, if an application needs a narrower range of input values than the range of values supplied by device. In such cases devices can support writable parameters that influence the channel data type properties (range and resolution) in the device. If such parameters are changed (normally by the assistant application in the microServer) this leads to changes in the MEDS, a reload of that MEDS and the adoption of the new data type by the microServer application. Such capability of the MicroNet system is described as Data Typing on Demand (DTD).

Agents are software components that have, for example, the following features:
- They are proactive, each of them having their own goals to achieve.
- They are re-locatable between heterogeneous computers according to some deployment scenario.
- They are able to communicate in heterogeneous networks via exchanging messages, which belong to a domain of the same ontology
- They are controlling, using and sharing some resources of the network and computers

A set of communicating agents forms a multi-agent system that solves a task set for such multi-agent system.

Since the behavior of large multi-agent systems is a field of current research; microNet applications can partially apply proven methods and features of agent design and development to optimize solving of automation tasks.

Apparently, microNet is already a multi-agent system, where agents are applications running on the microServer and on the microGates (or on microGateways or microRouters) that are communicating by sending values over virtual data channels (messaging) in accordance to descriptions of such values residing in MEDS tables and microNet databases (ontology).

In many control tasks part of a task can be logically separated from other tasks if they are only loosely connected. Practical examples are filtering of a measured value or a separate control loop which is only connected to main loop by a set point. Such tasks may be worth relocating from the microServer to the proximity of the source of required measuring data or to the sink of required control data - i.e. into the microGate. Such delegation will offload computational tasks from the MicroServer, and also reduce the overall network traffic.

As the microNet comprises heterogeneous devices like microServers and microGates which have different CPU command sets, different I/O ports, different capacities in terms of RAM and persistent storage, there are contemplated means of abstraction of computation from the physical implementation of the machine on which an agent is running. Such an abstraction is typically provided by a microNet Virtual Machine (MVM), which interprets standardized byte-code. In this way, any application compiled to byte-code is independent of a particular machine architecture. The only system software necessary is the MVM running on that architecture. Still, in control tasks several challenges must be resolved:
MVMs will have different performance on different processors. This will influence the timely behavior of an agent (creating longer time lags or even rendering an agent unable to solve the task in real-time).

In spite of creating an abstraction of target CPUs MVMs may vary in the amounts of RAM and persistent storage. This can prevent an agent from running successfully on a microGate device, even if it has been successfully deployed.

Data channels of a microNet system which supports agents may also support automatic rerouting from local communications to communications over the MicroNet network and vice versa. This supports flexible deployment of agents. Also, time lags imposed by this rerouting may be considered in deployment optimization.

All management activities of agents create additional network traffic and CPU loads which will influence the performance of control tasks.

The method of choosing of a required set of hardware to support the described MVM scheme, capable of running many control tasks simultaneously becomes extremely complex, since at the time of choice many software parts of the system are yet undefined.

To solve challenges as listed above the following exemplary listing of features and tools' support of a MicroNet Virtual Machine and related software are considered:
- There is a special software tool called Agent Integration and Deployment (AID) for the deployment of agents, as part or plug-in of the microNet assistant application. AID is used primarily for discovering MVMs in a microNet network, optimizing agent deployment, and creating deployment scenarios, which subsequently can be executed by one or several microServers.
- The MVM has the capability of running several agents, but any agent, once deployed, has a predefined and constant amount (percentage) of MVM resources it requested before deployment.
- The MVM supports reporting of unused (free) resources.
- Any MVM running an agent instance is considered a normal microNet application.

A parameterized model of MVM is used by AID to assist the estimation of worst case resource consumption scenarios. The parameters for the model are published by the examined target device (in its MEDS) and by the examined agent (in its database). Applying such a model it is possible to decide whether the examined agent will run on the examined device or not.

Any agent deployment activity is either completed before starting one or several control tasks, or only free resources are used (lowest priority in computing and communication) while running such control tasks.

Data channels in the MicroNet system will support rerouting from local to network sources and destinations.

There is a model of a multi-agent system used by AID which can assist optimizing agent deployment scenarios taking into consideration any resource bottlenecks

A feature of multi-agent systems is self-deployment. Self deployment means that no particular scenario is used, but agent relocations are decided by running necessary optimization tasks on the target platform. To use this scenario the control system software must be designed in special way to allow distributed execution. This is possible to achieve using techniques like diamond-structure analysis and also special CASE tools dedicated to the design and development of multi-agent systems.

Self optimization is a method of rearranging the deployment of agents when some features of the system are modified. This feature uses the same models as automatic deployment described above, but runs in the background while the control task(s) is (are) running.

While this feature is more related to artificial intelligence it should also be mentioned here. Self organizing of multi-agent systems happens when agents are aware of all other agents in a network and can proactively (i.e. by themselves) choose other agents for their services. That leads to robustness, because if an agent cannot solve the task or is cut off from others then another multi-agent system reorganizes itself to compensate for the failing functions.

The following tables include - without any intention of limitation to the descriptions given here - explanations of how terms and abbreviations may be used to describe preferred embodiments of the present invention.

**Glossary of Terms**

| **Term** | **Description** (primarily defined for preferred embodiments) |
|---|---|
| appInterface | Root of database hierarchy |
| Assistant application | Application with GUI that helps to find and connect data channels of other applications. |
| Asynchronous data channels | Channels that have internal memory and relaxed delivery of information. |
| Authentication in strong mode | Authentication of device by microServer after each transaction. |
| Authentication in weak mode | Authentication of device by microServer which is done only upon installation of device. |
| CCL library, API. | Channel Configuration Layer. Library and API which helps microServer applications to interconnect and intercommunicate with data channels. |
| Channel group | Group of channels packed in one PCV. |
| Data channel | Logical unit of intercommunication between microServer applications. |
| Data channel host | Application that has and writes the output channel. |
| Data channel subscriber | Application that has an input channel and connects to output channel of other application. |
| Data Typing on Demand (DTD) | An innovative method by which a microServer application computes the required destination format from raw data and calibration information taken from the microGate MEDS |
| Event data channels | Channels that have meaningful timestamp of value, and meaningless value, so the value is not stored. |
| Far device.(F-device) | Term for second tier devices. It is logically represented as microNode. |
| lapTool | Assistant application that is designed for laptops. |
| Location string property | Property that describes place of mount of microGate. |
| Loop network topology | Redundant network topology. Uses 2 phys. comm. Channels of microServer. |
| Manual address property | Property that has the value from setting micro-dial or micro switches on microGate. |
| Matching | Process of applying the rules of one database object to another that has Boolean result - matches or does not match. |
| Micronet Automation eXchange (MAX) | Manufacturer Group; to be established in order to promote microNet Pervasive Interoperability |
| microNet Electronic Datasheet (MEDS) | Specially formatted file which describes information interface of a microNode. |
| Merging | Process of concatenating two parts of databases. |
| MFTP | microNet file transfer protocol. Bidirectional general-purpose file transfer between microGate and microServer. |
| microAdapter | family of products including the microInterface circuitry to serve as a digital adapter module to microNets |
| microBox | family of products developed by the inventors which are generic microGates that allows serial connectivity of every conventional sensor or actuator to microNet networks through common standard serial interfaces |
| microEngine | microNet protocol stack in a microGate. |
| microGate | A slave device that has Pyxos Point interface with support of microNet protocol. |
| microGate Smart Connection | Method or procedure of automatic discovery of a microGate on connection |
| microGateway | A microGate which represents other (second tier) network devices in terms of microNet. |
| microComm module | Extension module which plugs into the main PCB of a microServer. |
| microNet command | Command from micro Server to microGate |
| microNet database | A hierarchy of abstract objects used to describe automation network, and a file which is used to store it. |
| microNet message | Message from a microGate to a microServer |
| microNet Toolbox | Library for control algorithms and functions available to microServer applications. |
| MicroNode | A logical device in microNet. |
| MicroRouter | A microGateway from/to a second tier microNet. |
| MicroServer | A central building block of microNet technology; has several communication. Interfaces and can run user applications. |
| MicroServer interface to Network Driver (MIND) | . A microServer application that provides communications with microNet on one hand and other microServer applications on the other hand. |
| Name property | Property that holds the name of the object. Channels have names. |
| Near device. (N-device) | Term for first tier devices : microGates, microGateways, microRouters. Used in contrast to second tier devices. |
| Node | Abstract of branch in tree-like database hierarchy. |
| Operational mode of microGate | Mode when microGate is configured and carries out its major functionality. Normal state. |
| palmTool | Assistant application that is designed for handheld PDAs. |
| Parameters | Named units that can be changed to tune the behavior of an application. |
| Pervasive Interoperability | Enhanced level of interoperability comprising devices, physical media, communication protocols and control applications of several manufacturers and/or user organizations |
| physical communication channel | A twisted pair of wires together with electrical interfaces. |
| PCV Mapping Table.(PMT) | A file used in microGateways to describe base PCIs of a microNode's channel groups. |
| Properties | Named units that by values describe the database objects. |
| Rail network topology | Redundant network topology. Uses two physical communication channels of a microServer. Supported by devices with two Pyxos communication interfaces. |
| Rules | Units that apply constraints on object's properties to match objects (channels). |
| Smart Channel Connection.(SCC) | Process of discovering a device and representing it in the microServer database which works fully automatically. |
| Service mode of microGate | Mode when a microGate suspends its major functionality. Used for service purposes. |
| Service pin | A small button which helps to identify the microGate. |
| Subscription | Process of connection of an input channel to an output channel for data communication. |
| Synchronous data channels | Channels that deliver information every and each time it is updated or obtained. |
| Universal channel locator (UCL) | A string in format of HTTP GET method that precisely describes the path to find the corresponding output channel in the application's database. |
| Usage tag property | Property that holds description of usage of a microGate. |
| Wink | Blinking of microGate's LED initiated by an assistant application. |

**List of Abbreviations used Explanations (alphabetical order)**

| **Abbreviation** | **Explanation** |
|---|---|
| 2D/3D | 2 and 3 dimensional |
| A/D | Analog to Digital Conversion |
| AC | Alternating Current |
| API | Application Programming Interface |
| Asi | Actuator Sensor Interface (device bus standard) |
| ATMEGA | Microprocessor family of ATMEL |
| BACnet | Building Automation Control network; ISO standard in building automation, particularly HVAC |
| C++ | Object oriented programming language |
| CAN | Car Automation Network (serial protocol standard, predominantly in the automotive industry |
| CCL (API) | Channel Connection Layer; |
| CoDeSys | Control Development System; an IEC 61131 compliant programming and runtime system created and marketed by 3S Software GmbH |
| CPU | Central Processing Unit |
| D/A | Digital to Analog conversion (opposite of A/D) |
| DALI | Digital Access Lighting Interface (dimming protocol used in the lighting industry) |
| DB (access) | Database (access) |
| DC | Direct current |
| DTD | Data Typing on Demand |
| EIB | European Installation Bus (European standard for digital electrical installation; related to KONNEX) |
| EPROM | Erasable Programmable Read only Memory |
| F-device | Second tier microNet device ("far") |
| FLASH (EPROM) | Non-volatile Read/Write (erasable) memory used by microprocessors for permanent storage of programs and data |
| GPRS | General Packer Radio Service; a data communication service provided by most Telecom companies |
| GPS | Global Positioning System |
| GSM (modem) | Global System for Mobile Communication; a data service using standard analog telephone communication with modem connectivity |
| GUI | Graphical User Interface |
| HTML | Hypertext Markup Language; the most widely used standard for creating and executing Web pages |
| HVAC | Heating Ventilation and Air Conditioning |
| I/O | Input/Output |
| I²C | Low cost, short range serial bus standard |
| IC | Integrated Circuit |
| ID (physical) | Identifier (number which identifies a particular (physical) device |
| IDA | Industrial Distributed Architecture ; used in conjunction with Industrial Ethernet protocols |
| IEEE | International Standardization body for Electrical Engineering |
| IP | Intellectual Property; meaning ownership of know-how and a technical invention protected by patent |
| IPC | Inter-process communication |
| KONNEX (KNX) | European standard - and Association - for digital electrical installations; headed by SIEMENS |
| LA | Logical Address; used internally by microNet to address a microGate independent of its UID |
| LED | Light Emitting Diode; typically used for indication of a hardware or software states in electronic circuits |
| LID | Local Identifier; used for addressing groups of nodes representing microGates, |
| LINUX | Powerful (embedded) Operating System; shareware under Public License; used in microServer |
| LON | Local Operating System; a US and European standard for control networks, mostly in building automation |
| MAC (ID) | Medium Access protocol (Identifier) |
| macroNet or polyNet | A network consisting of multiple microNets; |
| MAX | Micronet Automation Exchange; association of manufacturers of microNet products |
| M-Bus | Measuring Bus; an industry standard for a serial measurement protocol; well established in Europe |
| MEDS | microNet Electronic Data Sheet; a file of self-descriptive information located in a microGate |
| MFTP | microNet File Transfer Protocol |
| MIND | microNet Interface to Network Driver; application which provides the microNet protocol stack |
| MMC | Multi Media Card; special form factor of a Flash memory disk used widely in digital photography |
| MSC | microGate Smart Connection; Method or procedure of automatic discovery of a microGate on connection |
| Modbus (protocol) | A low-level bit protocol, very popular in the US |
| N-device | A microGate or microGateway or microRouter which are connected to an microNet (first tier or "near" devices) |
| OPC/XML | Open Process Control/eXtended Markup Language (open standard for data exchange maintained by the OPC foundation) |
| PC | Personal Computer |
| PCB | Printed Circuit Board |
| PCI | Pyxos Control Index |
| PCV | Pyxos Control Variable |
| PDA | Personal Data Assistant; small pocket size or handheld computer. If equipped with Web access it can be used as a microNet installation tool |
| PHP | Personal Home Page; a language which requires a Hypertext pre-processor before execution |
| PI | Pervasive Interoperability ; an outstanding feature of the inventors' technology which goes beyond the conventional implementations of interoperability |
| PLC | Programmable Logic Controller |
| PMT | PCV Mapping Table; assignment of PCVs to Channel Groups |
| PS (API) | Protocol Specific (API); provides additional functionality which is not supported by the CCL API. |
| PYXOS | A low level, low cost communication processor designed and marketed by Echelon Corporation |
| RAM | Random Access Memory; i.e. volatile memory for rapidly processing information |
| RF (enOcean) | Radio Frequency standard created and marketed by enOcean |
| RS232 | Standard point to point serial interface; supports communications via modem |
| RS485 | Standard multi-drop serial bus; chosen by most field busses as physical layer |
| SIL (3) | Safety Integrity Level (up to level 4) as specified in the IEC 61508 standard |
| SCC | Smart Channel Connection" (SCC) process; an intelligent way to connect (bind) channels between micro-Gates and applications by means of an "Assistant" Web server application |
| SOAP/XML | Small Object Access Protocol/eXtended Markup Language; a self-descriptive IP protocol invented and promoted by Microsoft Corp. |
| SP (message) | Service Pin (message); used to manually identify a particular device or microGate |
| SPI | Serial Programmable Interface; high-performance serial bus interface used by microNet |
| TCP/IP | Transmission Control Protocol/Intemet Protocol; most widely used transport protocol in Ethemet/Intemet communication |
| TDMA | Time Division Multiplexed Access; a synchronous layer 2 protocol which is used by Pyxos and, in a preferred implementation, by Micronet Automation |
| TEDS | Transducer Electronic Data Sheet; a self-descriptive file of information for sensors and actuators specified by the IEC 1451.2 standard |
| TFT | Thin Film Transistor technology; used widely in display technology |
| UCL | Universal Channel Locator; an extended address scheme used by microNet to address devices and channels in a microNets or in the Internet |
| UDP/IP | User Datagram Protocol; connectionless transport protocol in Ethernet/Internet communication which can access applications |
| UID | Unique (physical) Identifier for devices; typically burned in during manufacturing |
| ULB | Upper and Lower Limits Binary format; a universal data and parameter format used by MicroNet in order to increase overall networking efficiency and performance |
| UMTS | Universal Mobile Telecommunication System; used by all kinds of mobile devices for sound, pictures, and other types of information |
| URL | Universal Resource Locator; an address scheme that is used to locate Web pages in the Internet |
| USB | Universal Serial Bus; a modem serial protocol used by PCs and Laptops as peripheral bus |
| V (AC or DC) | Volts (Alternating or Direct current) |
| ZIGBEE | An open, i.e. documented Radio Frequency standard in the 2.4 GHz band, supported and promoted by the ZIGBEE Association |

## Claims

1. A method of operating a field device system,
wherein field device system includes a data source, an application unit and a network for digital data communications between data source and the application unit, wherein the data source is adapted to generate dimension-less data values in response to physical conditions in an environment of the data source, the method comprising the steps of:
- defining a lower limit and an upper limit for the data source, the lower limit and the upper limit defining a range only in which the data source is capable of generating dimension-less data values;
- defining a function that maps dimension-less data values of the data source to a physical condition in the environment of the data source;
- including information indicative of the lower limit, the upper limit and the function, respectively, in an electronic data sheet;
- providing the electronic data sheet to the application unit;
- generating by means of the data source at least one dimension-less data value;
- communicating the at least one dimension-less data value from the data source to the application unit; and
- processing by means of the application unit the at least one dimension-less data value on the basis of information indicative of the lower limit, the upper limit and the function, respectively, in the electronic data sheet to obtain a dimensional quantity representing a physical condition in the environment of the data source in response to which physical condition the at least one dimension-less data value has been generated.

2. A method of operating a field device system,
wherein field device system includes a data sink/consumer, an application unit and a network for digital data communications between data sink/consumer and the application unit, wherein the data sink/consumer is adapted to be operated on the basis of dimension-less data values each of which indicating a physical condition to be effected by the data sink/consumer, the method comprising the steps of:
- defining a lower limit and an upper limit for the data sink/consumer, the lower limit and the upper limit defining a range only in which the data sink/consumer is capable of being operated;
- defining a function that maps dimension-less data values for the data sink/consumer to a respective physical condition to be effected by the data sink/consumer;
- including information indicative of the lower limit, the upper limit and the function, respectively, in an electronic data sheet;
- providing the electronic data sheet to the application unit;
- providing at least one dimensional quantity representing a physical condition to be effected by the data sink/consumer;
- processing the at least one dimensional quantity by means of the application unit on the basis the information indicative of the lower limit, the upper limit and the function, respectively, in the electronic data sheet to obtain at least one dimension-less data value;
- communicating the at least one dimension-less data value from the application unit to the data sink/consumer; and
- effecting by means of the data sink/consumer on the basis of the at least one dimension-less data value the physical condition.

3. The method of one of the preceding claims, including a step of
- providing a data carrying tag, which tag includes information on the basis of which the electronic data sheet can be obtained;
- retrieving the information from the data carrying tag; and
- obtaining the electronic data sheet on the basis of the information retrieved from the data carrying tag.

4. The method of one of the preceding claims, wherein, as the information indicative of the lower limit, the upper limit and the function, respectively, at least one of the lower limit, the upper limit and the function as such is included in the electronic data sheet.

5. The method of one of the preceding claims, wherein the dimension-less data values are analog data values.

6. The method of one of the preceding claims, wherein the function includes at least one of
- a linear function, which linearly maps dimension-less data values to physical quantities and/or conditions; and
- a non-linear function, which non-linearly maps dimension-less data values to physical quantities and/or conditions.

7. The method of one of the preceding claims, wherein the function includes an indication of a physical unit.

8. Field device system comprising
- a data source, wherein the data source is adapted to generate dimension-less data values in response to physical conditions in an environment of the data source;
- an application unit;
- a network for digital data communications between data source and the application unit; and
- an electronic data sheet including information indicative of a lower limit, an upper limit and a function, wherein the lower limit and the upper limit define a range only in which the data source is capable of generating dimension-less data values and wherein the function maps dimension-less data values of the data source to a physical condition in the environment of the data source; wherein
- the application unit is adapted to process a dimension-less data value communicated from the data source on the basis of the information indicative of the lower limit, the upper limit and the function, respectively, in the electronic data sheet to obtain a dimensional quantity representing a physical condition in the environment of the data source, in response to which physical condition the at least one dimension-less data value has been generated.

9. Field device system comprising
- a data sink, wherein the data sink is adapted to be operated on the basis of dimension-less data values each of which indicating a physical condition to be effected by the data sink;
- an application unit;
- a network for digital data communications between data sink and the application unit; and
- an electronic data sheet including information indicative of a lower limit, an upper limit and a function, wherein the lower limit and the upper limit defining a range only in which the data sink is capable of being operated and wherein the function that maps dimension-less data values for the data sink to a respective physical condition to be effected by the data sink; wherein
- the application unit is adapted to process a dimensional quantity on the basis the information indicative of the lower limit, the upper limit and the function, respectively, in the electronic data sheet to obtain at least one dimension-less data value;
- the application unit is adapted to communicate the dimension-less data value to the data sink; and
- the data sink is adapted to effect on the basis of the dimension-less data value the physical condition.

10. The field device system of claim 8 or 9, further comprising
- a data carrying tag, which tag includes information on the basis of which the electronic data sheet can be obtained, wherein the application unit is adapted to retrieve the information from the data carrying tag and to obtain the electronic data sheet on the basis of the information retrieved from the data carrying tag.

11. The field device system of one of the claims 8 to 10, wherein, as the information indicative of the lower limit, the upper limit and the function, respectively, at least one of the lower limit, the upper limit and the function as such is included in the electronic data sheet.

12. The field device system of one of the claims 8 to 11, wherein the dimension-less data values are analog data values.

13. The field device system of one of the claims 8 to 12, wherein the function includes at least one of
- a linear function, which linearly maps dimension-less data values to physical quantities and/or conditions; and
- a non-linear function, which non-linearly maps dimension-less data values to physical quantities and/or conditions.

14. The field device system of one of the claims 8 to 13, wherein the function includes an indication of a physical unit.
